(19)

**Europäisches Patentamt**
**European Patent Office**
**Office européen des brevets**

(11) **EP 4 708 277 A1**

(12) **EUROPEAN PATENT APPLICATION**

(43) Date of publication:
**11.03.2026 Bulletin 2026/11**

(21) Application number: **24306477.1**

(22) Date of filing: **10.09.2024**

(51) International Patent Classification (IPC):
***G09G 5/02*** *(2006.01)* ***H04N 1/60*** *(2006.01)*

(52) Cooperative Patent Classification (CPC):
**G09G 5/02; H04N 9/67; H04N 9/68;**
G09G 2320/0666; G09G 2340/06; H04N 1/6058

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **TOUZE, David**
  **35200 RENNES (FR)**
• **MORVAN, Patrick**
  **35890 LAILLE (FR)**
• **MAZZANTE, Angelo**
  **35520 MELESSE (FR)**

(74) Representative: **Interdigital**
**Immeuble ZEN 2**
**845 A, avenue des Champs Blancs**
**35510 Cesson-Sévigné (FR)**

(54) **IMPROVED COLOR GAMUT CLIPPING ON QUANTIZED GAMUT BORDER COLORS**

(57)     A method comprising:
obtaining a first YUV picture in a first color gamut;
applying a conversion process to the first YUV picture to obtain a second YUV picture in a second color gamut, the first color gamut encompassing the second color gamut, the conversion process comprising for a first YUV pixel of the first YUV picture:
obtaining (712) a component of a first RGB pixel in the second color gamut obtained from the first YUV pixel; and,
applying (713) a gamut clipping process to the component, the gamut clipping process consisting in clipping the component to a value defined by a clipping curve responsive to the component fulfil a clipping criterion based on the clipping curve;
wherein, the clipping curve is determined using a clipping curve determination process based on at least one second YUV pixel in the first color gamut with a value neighboring the value of the first YUV pixel and that provide a value of the component not fulfilling the clipping criterion when the second YUV pixel is converted in a second RGB pixel in the second color gamut.

Fig. 7

EP 4 708 277 A1

# EP 4 708 277 A1

**Description**

## 1. TECHNICAL FIELD

At least one of the present embodiments generally relates to the field of production of video and more particularly to a method, a device and a system for reducing a quantization effect in a conversion of a video content from a first color gamut to a second color gamut.

## 2. BACKGROUND

In order to ensure interoperability between video devices, many video systems comprise at least one conversion stage allowing for instance converting a YUV signal with a given Transfer function and given color gamut to a YUV signal with another transfer function and another color gamut

This is particularly true in a single stream HDR (High Dynamic Range)/SDR(Standard dynamic Range) system wherein a single stream allow distributing a SDR and a HDR version of the same content. For example, the standard SL-HDR1 (High Performance Single Layer High Dynamic Range (HDR) System for use in Consumer Electronics devices; Part 1: Directly Standard Dynamic Range (SDR)Compatible HDR System (SL-HDR1); ETSI TS 103 433-1 V1.4.1 (2021-08*))* allows transmitting a HDR version of a content in the form of a SDR version of the content with metadata allowing the conversion from SDR to HDR. Typically, the SDR version is using YUV "8" bits or "10" bits with a BT.709 transfer function and a BT.709 color gamut, as described in BT.709 recommendation *(Recommendation ITU-R BT. 709-6, Parameter values for the HDTV standards for production and international programme exchange, 06/2015).* The HDR on its side is generally using a YUV "10" bits or "12" bits with a PQ or HLG transfer function and a BT.2020 color gamut as described in BT.2100 recommendation *(Recommendation ITU-R BT.2100-2, Image parameter values for high dynamic range television for use in production and international programme exchange, 07/2018).*

A conversion from HDR YUV data to SDR YUV data is typically called a tone mapping (TM) while the inverse conversion is typically called inverse tone mapping (ITM). A typical TM comprises a color gamut conversion of RGB values from a first color gamut to a second color gamut. Such conversion may require a clipping of the values outputted by the color gamut conversion to make sure that the output of the color gamut conversion fits well within the second color gamut. It has been observed that a basic clipping may create some issues when the basically clipped RGB values in the second color gamut are then converted in YUV values for the SDR YUV data.

It is desirable to overcome the above drawbacks.

It is particularly desirable to propose an improved gamut clipping method limiting the issues created by the basic gamut clipping method.

## 3. BRIEF SUMMARY

In a first aspect, one or more of the present embodiments provide a method comprising:

obtaining a first YUV picture in a first color gamut;

applying a conversion process to the first YUV picture to obtain a second YUV picture in a second color gamut, the first color gamut encompassing the second color gamut, the conversion process comprising for a first YUV pixel of the first YUV picture:

obtaining a component of a first RGB pixel in the second color gamut obtained from the first YUV pixel; and,

applying a gamut clipping process to the component, the gamut clipping process consisting in clipping the component to a value defined by a clipping curve responsive to the component fulfil a clipping criterion based on the clipping curve;

wherein, the clipping curve is determined using a clipping curve determination process based on at least one second YUV pixel in the first color gamut with a value neighboring the value of the first YUV pixel and that provide a value of the component not fulfilling the clipping criterion when the second YUV pixel is converted in a second RGB pixel in the second color gamut.

In an embodiment, the clipping curve determination process comprises:

browsing preliminary RGB pixels in a preliminary color gamut located at a boundary of the preliminary color gamut;

applying a first conversion process converting the preliminary RGB pixels to obtain quantized YUV pixels in the first color gamut;

for each obtained quantized YUV pixel:

deriving a plurality of virtual YUV pixels with a value neighboring the quantized YUV pixel from the quantized YUV pixel;

for each current virtual YUV pixel:

applying a second conversion process converting the current virtual YUV pixel to obtain a converted RGB pixel in the second color gamut; and,

for each component of the converted RGB pixel, responsive to the component is out of the second color gamut, applying a correction to the component to obtain a corrected component, the corrected component being obtained from a component of another converted RGB pixel inside the second color gamut derived from another virtual pixel of the plurality already processed by the second conversion process;

for each color component among R, G and B, obtaining an average component from all obtained corrected components for each quantized YUV pixel; and,

deriving a clipping curve for this color component from the average components corresponding to this color component.

In an embodiment, browsing preliminary RGB pixels in the preliminary color gamut located at a boundary of the preliminary color comprises:

defining a plurality of independent loops in which at least one component among R, G and B is varying on its range of values and at least one other component among R, G and B is fixed to zero;

creating a look-Up Table for each component fixed to zero for each loop;

each Look-Up Table being used to store the average components corresponding to component fixed to the zero considered for this Look-Up Table.

In an embodiment, the Look-Up Tables are used to define point clouds from which are derived a clipping curve for each component.

In an embodiment, each point cloud is approximated by at least one model, the models being used to derive each clipping curves.

In an embodiment, each model is a straight line or a polynomial function.

In an embodiment, each clipping curve is defined by at least one clipping constant derived from the point clouds.

In an embodiment, three clipping constants are derived, a first clipping constant being higher than zero, a second clipping constant being lower than zero and a third clipping constant being lower than the second clipping constant, no clipping being applied to a component higher than the first clipping constant, components between the first and the second clipping constants being clipped to a first clipping value, components lower than the third clipping constant being clipped to zero, components between the second and the third clipping constants being clipped according to a decreasing curve connecting the first clipping value to zero.

In a second aspect, one or more of the present embodiments provide a device comprising electronic circuitry configured for:

obtaining a first YUV picture in a first color gamut;

applying a conversion process to the first YUV picture to obtain a second YUV picture in a second color gamut, the first color gamut encompassing the second color gamut, the conversion process comprising for a first YUV pixel of the first YUV picture:

obtaining a component of a first RGB pixel in the second color gamut obtained from the first YUV pixel; and,

applying a gamut clipping process to the component, the gamut clipping process consisting in clipping the component to a value defined by a clipping curve responsive to the component fulfil a clipping criterion based on the clipping curve;

wherein, the clipping curve is determined using a clipping curve determination process based on at least one second YUV pixel in the first color gamut with a value neighboring the value of the first YUV pixel and that provide a value of the component not fulfilling the clipping criterion when the second YUV pixel is converted in a second RGB pixel in the second color gamut.

In an embodiment, the clipping curve determination process comprises:

browsing preliminary RGB pixels in a preliminary color gamut located at a boundary of the preliminary color gamut;

applying a first conversion process converting the preliminary RGB pixels to obtain quantized YUV pixels in the first color gamut;

for each obtained quantized YUV pixel:

deriving a plurality of virtual YUV pixels with a value neighboring the quantized YUV pixel from the quantized YUV pixel;

for each current virtual YUV pixel:

applying a second conversion process converting the current virtual YUV pixel to obtain a converted RGB pixel in the second color gamut; and,

for each component of the converted RGB pixel, responsive to the component is out of the second color gamut, applying a correction to the component to obtain a corrected component, the corrected component being obtained from a component of another converted RGB pixel inside the second color gamut derived from another virtual pixel of the plurality already processed by the second conversion process;

for each color component among R, G and B, obtaining an average component from all obtained corrected components for each quantized YUV pixel; and,

deriving a clipping curve for this color component from the average components corresponding to this color component.

In an embodiment, browsing preliminary RGB pixels in the preliminary color gamut located at a boundary of the preliminary color comprises:

defining a plurality of independent loops in which at least one component among R, G and B is varying on its range of values and at least one other component among R, G and B is fixed to zero;

creating a look-Up Table for each component fixed to zero for each loop;

each Look-Up Table being used to store the average components corresponding to component fixed to the zero considered for this Look-Up Table.

In an embodiment, the Look-Up Tables are used to define point clouds from which are derived a clipping curve for each component.

In an embodiment, each point cloud is approximated by at least one model, the models being used to derive each clipping curves.

In an embodiment, each model is a straight line or a polynomial function.

In an embodiment, each clipping curve is defined by at least one clipping constant derived from the point clouds.

4. BRIEF SUMMARY OF THE DRAWINGS

Fig. 1A illustrates schematically an example of context in which the various embodiments are implemented;

Fig. 1B illustrates a process for converting YUV data from a first color gamut with a first transfer function to a second color gamut with a second transfer function;

Fig. 1C illustrates a process for converting YUV data from a second color gamut with a second transfer function to a third color gamut with a third transfer function, the second color gamut encompassing the third color gamut;

Fig. 2A illustrates schematically an example of hardware architecture of a processing module able to implement various aspects and embodiments;

Fig. 2B illustrates a block diagram of an example of a first system in which various aspects and embodiments are implemented;

Fig. 2C illustrates a block diagram of an example of a second system in which various aspects and embodiments are implemented;

Fig. 3A illustrates a basic clipping curve;

Fig. 3B illustrates a comparison of BT.709 and BT.2020 color gamuts;

Figs. 4A and 4B illustrates effects of a basic clipping on a color ramp;

Fig. 5A, 5B and 5C illustrates effects of a basic clipping on a sequence of pictures;

Fig. 6 illustrates a process for converting first YUV data in a first color gamut into second YUV data in a second color gamut, the first color gamut encompassing the second color gamut;

Fig. 7 illustrates the conversion process executed during the process of Fig. 6;

Fig. 8 illustrates a process for obtaining a clipping curve used in a gamut clipping process;

Fig. 9A illustrates a first example of a model approximating a point cloud used to determine a clipping curve;

Fig. 9B illustrates a second example of a model approximating a point cloud used to determine a clipping curve;

Fig. 10 illustrates a third example of model approximating a point cloud used to determine a clipping curve;

Fig. 11 illustrates a first embodiment of a clipping curve;

Fig. 12 illustrates a second embodiment of a clipping curve;

Fig. 13 illustrates a third embodiment of a clipping curve.

Fig. 14 illustrates an approximation of a point cloud with a polynomial function of order five; and,

Fig. 15A and 15B illustrate a comparison of an effect of a basic gamut clipping method to an effect of a gamut clipping method according to an embodiment.

## 5. DETAILED DESCRIPTION

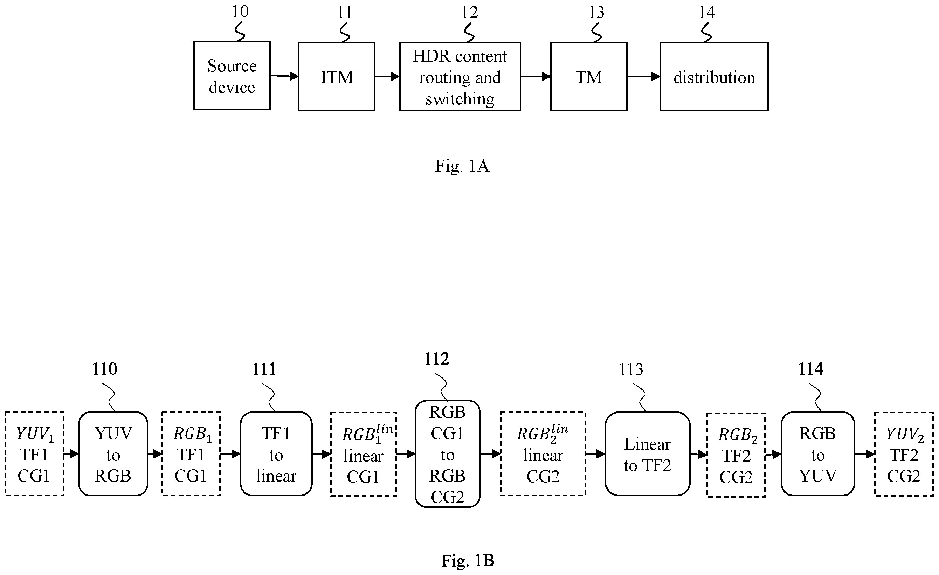

**Fig. 1A** illustrates an example of context in which the various embodiments are implemented.

In Fig. 1A, a source device 10 provides a video content to a ITM module 11. The source device 10 is for instance a SDR camera generating a SDR version of the video content. The SDR version corresponds to first YUV data $YUV_1$ with a first transfer function and a first color gamut. For example, the first YUV data $YUV_1$ are YUV "8" bits or "10" bits with a BT.709 transfer function (i.e., the first transfer function) and a BT.709 color gamut (i.e., the first color gamut).

The ITM module 11 converts the first YUV data $YUV_1$ into second YUV data $YUV_2$ with a second transfer function and a second color gamut. The second YUV data $YUV_2$ are for example "10" bits or "12" bits HDR data with a PQ or HLG transfer function and a BT.2020 color gamut.

The second YUV data $YUV_2$ are then provided to a routing and switching module 12. The routing and switching module 12 is in charge of routing the second YUV data $YUV_2$ (i.e., te HDR data) to a TM module 13.

The TM module 13 converts the second YUV data into third YUV data $YUV_3$ with a third transfer function and a third color gamut. For example, the third transfer function is identical to the first transfer function and the third color gamut is identical to the first color gamut. Due to roundings and quantizations performed by the ITM and the TM modules, the third YUV data $YUV_3$ are SDR data corresponding to an approximation of the first YUV data $YUV_1$.

The third YUV data $YUV_3$ are then provided to a distribution module 14 in charge of distributing these data for example on a network. The distribution module 14 generally comprises an encoding module in charge of encoding the third YUV data $YUV_3$ representing a SDR version of the video content in a bitstream using a video compression format such as AVC ((ISO/CEI 14496-10 / ITU-T H.264), HEVC (ISO/IEC 23008-2 - MPEG-H Part 2, High Efficiency Video Coding / ITU-T H.265)), VVC (ISO/IEC 23090-3 - MPEG-I, Versatile Video Coding/ ITU-T H.266), AV1, VP9, EVC (ISO/CEI 23094-1 Essential Video Coding) or any other video compression format adapted to encode SDR video contents. The output of the encoding system is a bitstream representing the encoded third YUV data $YUV_3$.

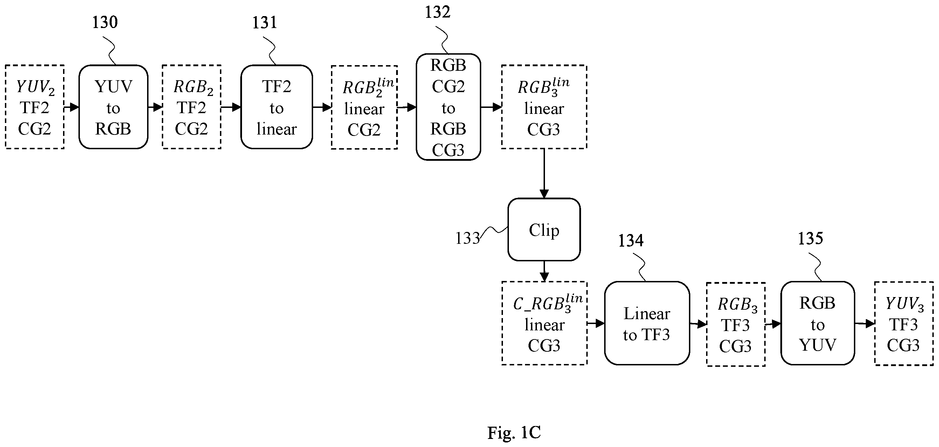

In a single stream HDR/SDR system based on SL-HDR1, an additional module, not represented in Fig. 1, generates SL-HDR1 metadata allowing converting SDR data in HDR data. These metadata are then provided along with the bitstream to a receiving system (not represented in Fig. 1) for instance via a network. The receiving system can then decide to either decode and display only the SDR version of the video content or to decode the SDR version of the video content and to generate a reconstructed HDR version of the video content applying an ITM based on the SL-HDR1 metadata. The reconstructed HDR version of the video content is then displayed by the receiving system.

**Fig. 1B** illustrates schematically a process executed by a color gamut conversion module comprised in the ITM module 11.

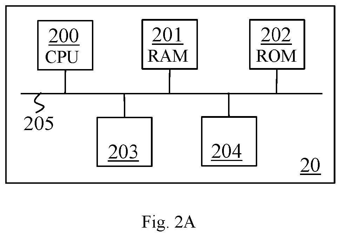

The process of Fig. 1B is for example implemented by a processing module 20 of the ITM module 11, the processing module 20 being described latter in relation to Fig. 2A.

In the example of Fig. 1B, the first YUV data $YUV_1$ were encoded or generated with a transfer function TF1 and a color gamut CG1. The second YUV data $YUV_2$ have a transfer function TF2 and a color gamut CG2.

In a step 110, the processing module 20 converts the YUV data $YUV_1$ (with a transfer function TF1 and a color gamut CG1) into RGB data $RGB_1$ (with a transfer function TF1 and a color gamut CG1) using a YUV to RGB matrix dedicated to the color gamut CG1.

In a step 111, the processing module 20 converts the RGB data $RGB_1$ (with a transfer function TF1 and a color gamut CG1) to RGB data $RGB_1^{lin}$ (in the linear domain with no transfer function and a color gamut CG1) using a non-linear converter dedicated to the TF1 to linear transform.

In a step 112, the processing module 20 converts the RGB data $RGB_1^{lin}$ (in the linear domain with no transfer function and a color gamut CG1) to RGB data $RGB_2^{lin}$ (in the linear domain with no transfer function and a color gamut CG2) using a RGB to RGB matrix dedicated to the CG1 to CG2 color gamut transform.

In a step 113, the processing module 20 converts the RGB video $RGB_2^{lin}$ (in the linear domain with no transfer function and a color gamut CG2) to RGB data $RGB_2$ (with a transfer function TF2 and a color gamut CG2) using a non-linear converter dedicated to the linear to TF2 transform.

In a step 114, the processing module 20 converts the RGB data $RGB_2$ (with a transfer function TF2 and a color gamut CG2) to YUV data $YUV_2$ (with a transfer function TF2 and a color gamut CG2) using a RGB to YUV matrix dedicated to the color gamut CG2.

**Fig. 1C** illustrates schematically a process executed by a color gamut conversion module comprised in the TM module 13.

The process of Fig. 1C is for example implemented by a processing module 20 of the TM module 13.

In the example of Fig. 1C, the processing module 20 of the TM module 13 obtains the second YUV data $YUV_2$ from the ITM module 11 via the HDR content routing and switching module 12.

In a step 130, the processing module 20 converts the YUV data $YUV_2$ (with the transfer function TF2 and the color gamut CG2) into RGB data $RGB_2$ (with the transfer function TF2 and a color gamut CG2) using a YUV to RGB matrix dedicated to the color gamut CG2.

In a step 131, the processing module 20 converts the RGB data $RGB_2$ (with a transfer function TF2 and the color gamut CG2) to RGB data $RGB_2^{lin}$ (in the linear domain with no transfer function and the color gamut CG2) using a non-linear converter dedicated to the TF2 to linear transform.

In a step 132, the processing module 20 converts the RGB data $RGB_2^{lin}$ (in the linear domain with no transfer function and the color gamut CG2) to RGB data $RGB_3^{lin}$ (in the linear domain with no transfer function and a color gamut CG3) using a RGB to RGB matrix dedicated to the CG2 to CG3 color gamut transform.

In a step 133, the processing module 20 applies a gamut clipping to the RGB data $RGB_3^{lin}$ (in the linear domain with no transfer function and the color gamut CG3), to produce RGB data $C\_RGB_3^{lin}$ (in the linear domain with no transfer function and the color gamut CG3).

In a step 134, the processing module 20 converts the RGB video $C\_RGB_3^{lin}$ (in the linear domain with no transfer function and a color gamut CG3) to RGB data $RGB_3$ (with the transfer function TF3 and a color gamut CG3) using a non-linear converter dedicated to the linear to TF3 transform.

In a step 135, the processing module 20 converts the RGB data $RGB_3$ (with the transfer function TF3 and a color gamut CG3) to YUV data $YUV_3$ (with the transfer function TF3 and the color gamut CG3) using a RGB to YUV matrix dedicated to the color gamut CG3.

Generally, the conversions of steps 110, 111, 112, 113, 114 and 130, 131, 131, 134, 135 are done in floating-point format for a better accuracy. At the end of the processes of Figs. 1B and 1C, a quantization is applied to the YUV data $YUV_2$ and $YUV_3$ (in floating point values) into YUV "8", "10" or "12" bits fix-point values.

In an example, the transfer function TF1 and TF3 are BT.1886 or BT.709, the color gamuts CG1 and CG3 are BT.709, the transfer function TF2 is PQ or HLG and the color gamut CG2 is BT.2020.

In step 132, as the color gamut CG2 (typically BT.2020) is broader than the color gamut CG3 (typically BT.709), a gamut clipping method is applied (in step 113) to make sure that the RGB data resulting from the conversion from the color gamut CG2 to the color gamut CG3 fits well within the color gamut CG3 boundaries.

One can note that, for questions of consistency of colors, the ITM module 11 produces a HDR content in the color gamut CG2 (for example BT.2020) but with colors limited to the color gamut CG1 (for example BT.709). Therefore, the gamut clipping is appropriate in the TM module 13.

Supposing that the RGB data $RGB_3^{lin}$ are normalized values, a basic gamut clipping method may be the following:

$$C\_R_3^{lin} = \text{Max}\,(0, \text{Min}(1, R_3^{lin}))$$

$$C\_G_3^{lin} = \text{Max}\,(0, \text{Min}(1, G_3^{lin}))$$

$$C\_B_3^{lin} = \text{Max}\,(0, \text{Min}(1, B_3^{lin}))$$

Where $R_3^{lin}$ (respectively $G_3^{lin}$, $B_3^{lin}$) represents the component R (respectively G, B) of the RGB data $RGB_3^{lin}$, $C\_R_3^{lin}$ (respectively $C\_G_3^{lin}$, $C\_B_3^{lin}$) represents the component R (respectively G, B) of the RGB data $C\_RGB_3^{lin}$ , *Max(x,y)* takes the maximum of *x* and *y* and *Min(x,y)* takes the minimum of *x* and *y*.

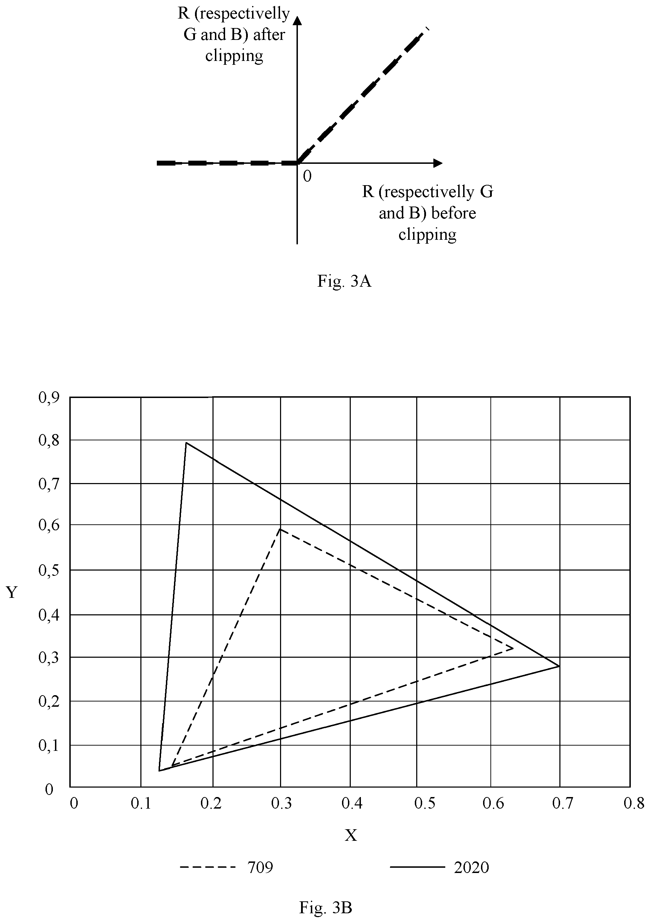

**Fig. 3A** illustrates the clipping curve used in the basic gamut clipping method. As can be seen, all negative components of the RGB data $RGB_3^{lin}$ are clipped to zero in the RGB data $C\_RGB_3^{lin}$ .

However, when applying such a basic gamut clipping method, some issues may appear in the YUV data $YUV_3$, especially on pixels of the YUV data $YUV_3$ corresponding to pixels of the YUV data $YUV_2$ that are on the color gamut CG3 boundaries. Typically, contiguous pixels of the YUV data $YUV_2$ representing a smooth transition between two colors may appear as a staircase transition (also called banding effect) in the YUV data $YUV_3$.

**Fig. 3B** illustrates a two-dimensional (2D) representation of the BT.709 color gamut and of the BT.2020 color gamut. A color gamut is generally represented by a volume in a three-dimensional (3D) space but to facilitate the understanding, color gamuts are represented in a 2D space in Fig. 3. As can be seen the BT.2020 color gamut is wider than (i.e. encompasses) the BT.709 color gamut.

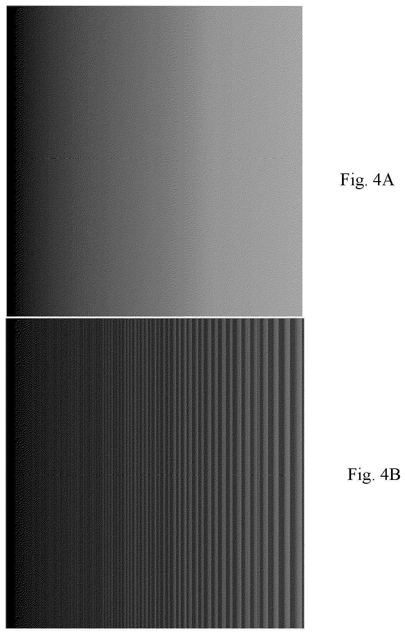

**Fig. 4A** provide an example of a greyscale representation of YUV data $YUV_2$ representing a color ramp (called red ramp in the following) wherein the R component increases smoothly from "0" to "1023" and the components G and B remain equal to "0".

**Fig. 4B** provide an example of a greyscale representation of YUV data $YUV_3$ resulting from the application of the process of Fig. 1C on the YUV data $YUV_2$ of Fig. 4A with a basic clipping process in step 133. As can be seen, a banding effect appears in Fig. 4B. These artefacts are unacceptable and need to be corrected.

While Fig. 4A and 4B illustrates issues occurring in the spatial domain, similar issues may also appear in the temporal domain.

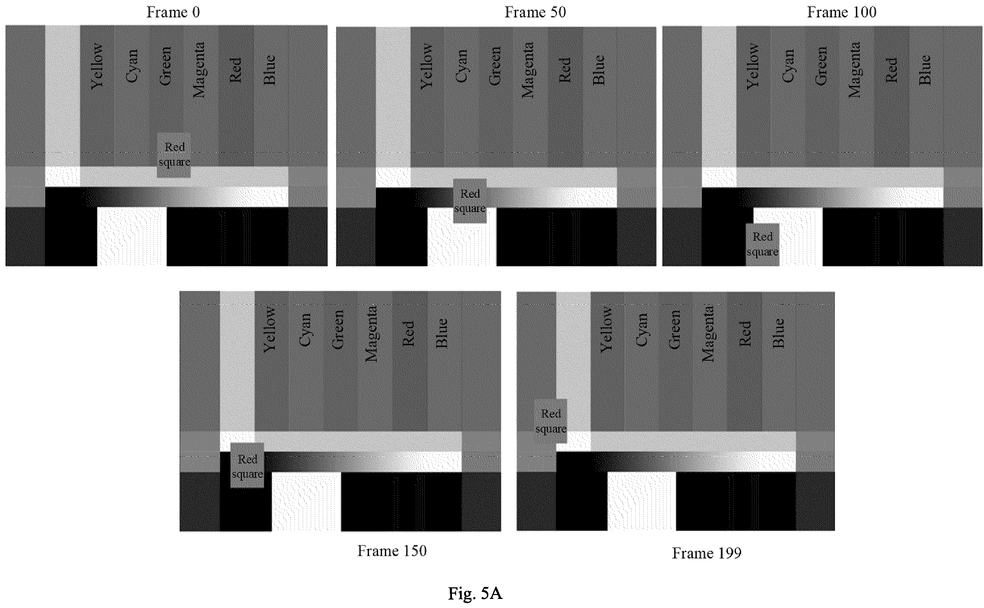

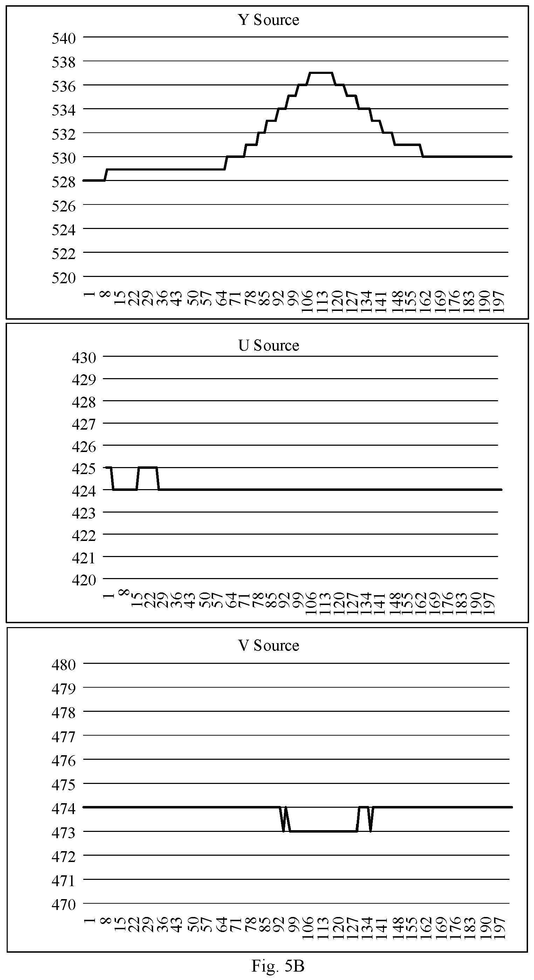

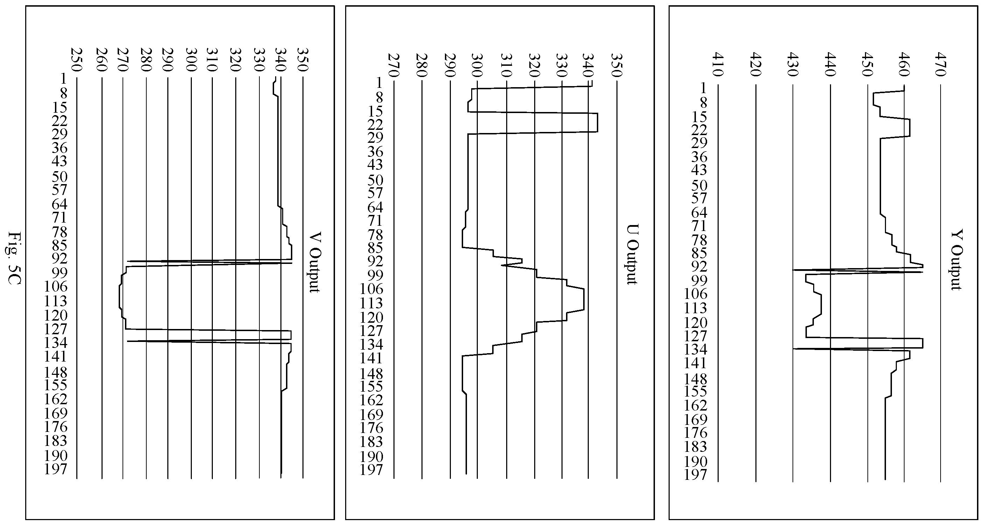

**Fig. 5A, 5B** and **5C** illustrate issues that may occur in the temporal domain in a video sequence.

Fig. 5A provide a greyscale representation of "5" frames of a video sequence of "200" frames made of a fixed SMPTE RP 219 test pattern (see document *"Society of Motion Picture and Television Engineers - RP 219-2:2016 Ultra High-Definition, 2048 × 1080 and 4096 × 2160 Compatible Color Bar Signal"*) with a red square moving on top of the SMPTE RP 219 pattern that has been converted to HDR with BT.2020 color gamut container using the ITM module 11, and in which all the colors are limited to the BT. 709 color gamut. The video sequence of "200" frames corresponds to the YUV data $YUV_2$ in Fig. 1C.

Fig. 5B represents a temporal evolution of the luminance component of a green patch of the YUV data $YUV_2$ (over the "200" frames of the video sequence).

Fig. 5C represents a temporal evolution of the luminance component of the green patch of the YUV data $YUV_3$ (over the "200" frames of the video sequence) outputted by the process of Fig. 1C.

As can be seen, while in the YUV data $YUV_2$, the luminance component varies smoothly, in the YUV data $YUV_3$ unjustified great variations appear.

The same behavior can be observed on the other color patches. This leads to a very annoying output video with unstable color patches that can suddenly change in brightness and color saturation, while these patches are supposed to be very stable.

Again, these artefacts are unacceptable and need to be corrected.

In the example of Figs. 5A, 5B and 5C, the transfer function of the YUV data $YUV_2$ is PQ. One can note that the same behavior can be observed when using a HLG transfer function, a BT.709 transfer function or a BT.1886 transfer function (see document "Recommendation ITU-R BT.1886-0, Reference electro-optical transfer function for flat panel displays used in HDTV studio production, 03/2011").

The issues illustrated above comes from the fact that the YUV data $YUV_2$ were quantized. The quantization introduces some loss of precision in the signal. When a quantized color is at a boundary of a color gamut BT.709, with at least one of the RGB value theoretically close to 0 (for example for a pure green patch, with components R and B very close to "0"), the quantization error on components with very low values (R and B for a green patch) can lead to internal values varying around "0", meaning sometimes positive but also sometimes negative. When applying a basic gamut clipping (i.e. a positive value is unchanged and a negative value is clipped to "0"), this leads to the issues and artefacts that have been illustrated in Fig. 4a, 4B, 5A, 5B and 5C.

Various embodiments propose a new clipping method that avoids unjustified large variations on the YUV data $YUV_3$ (i.e. the banding effect), providing smoother, more stable and more consistent content when converting YUV data $YUV_2$ in a color gamut CG2 (such as BT.2020) into YUV data $YUV_3$ in a color gamut CG3 (such as BT.709), specifically on pixels with values located on (or close to) the boundaries of the color gamut CG3 in the YUV data $YUV_2$.

The proposed solution consists in defining a gamut clipping method that does not necessarily clip negative components to "0", but instead, modifies (i.e., corrects) a negative component to a positive component. This corrected component should be close to a positive component of a first output pixel of the RGB data $RGB_3^{lin}$ obtained from a first input pixel of the RGB data $RGB_2^{lin}$ that is very close in value with a second input pixel of the RGB data $RGB_2^{lin}$ that produces a second output pixel of the RGB data $RGB_3^{lin}$ with this negative value. Furthermore, all positive components with a value lower than the corrected component are also modified to this corrected component. Doing so ensures that when a small component variation appears in the YUV data $YUV_2$, the gamut clipping method produces pixels that are close together and therefore YUV data $YUV_3$ without the artefacts and issues described formerly in Fig. 4a, 4B, 5A, 5B and 5C.

**Fig. 2A** illustrates schematically an example of hardware architecture of a processing module 20 comprised at least in the ITM module 11, in the TM module 13 or in a receiving system.

The processing module 20 comprises, connected by a communication bus 205: a processor or CPU (central processing unit) 200 encompassing one or more microprocessors, general purpose computers, special purpose computers, and processors based on a multi-core architecture, as non-limiting examples; a random access memory (RAM) 201; a read only memory (ROM) 202; a storage unit 203, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive, or a storage medium reader, such as a SD (secure digital) card reader and/or a hard disc drive (HDD) and/or a network accessible storage device; at least one communication interface 204 for exchanging data with other modules, devices, systems or equipment. The communication interface 204 can include, but is not limited to, a transceiver configured to transmit and to receive data over a communication network 21 (not represented in Fig. 2A). The communication interface 204 can include, but is not limited to, a modem or a network card.

For example, in the ITM module 11, the communication interface 204 enables the processing module 20 to receive YUV data $YUV_1$ and to output YUV data $YUV_2$. In the TM module 13, the communication interface 204 enables the processing module 20 to receive YUV data $YUV_2$ and to output YUV data $YUV_3$.

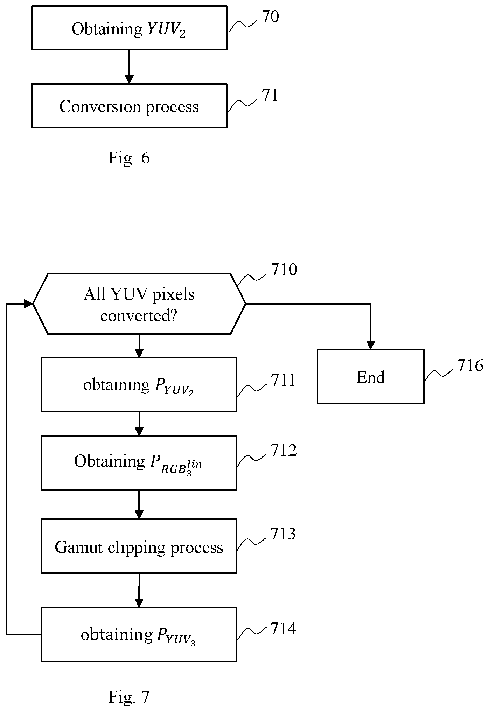

The processor 200 is capable of executing instructions loaded into the RAM 201 from the ROM 202, from an external memory (not shown), from a storage medium, or from a communication network. When the processing module 20 is powered up, the processor 200 is capable of reading instructions from the RAM 201 and executing them. These instructions form a computer program causing, for example, the implementation by the processor 200 of a process comprising the processes described in relation to Figs. 6, 7 and 8.

All or some of the algorithms and steps of these processes may be implemented in software form by the execution of a set of instructions by a programmable machine such as a DSP (digital signal processor) or a microcontroller, or be implemented in hardware form by a machine or a dedicated component such as a FPGA (field-programmable gate array) or an ASIC (application-specific integrated circuit). The processor 200, a DSP, a microcontroller, a FPGA and an ASIC are therefore examples of electronic circuitry adapted to implement the processes described in relation to Figs. 6, 7 and 8.

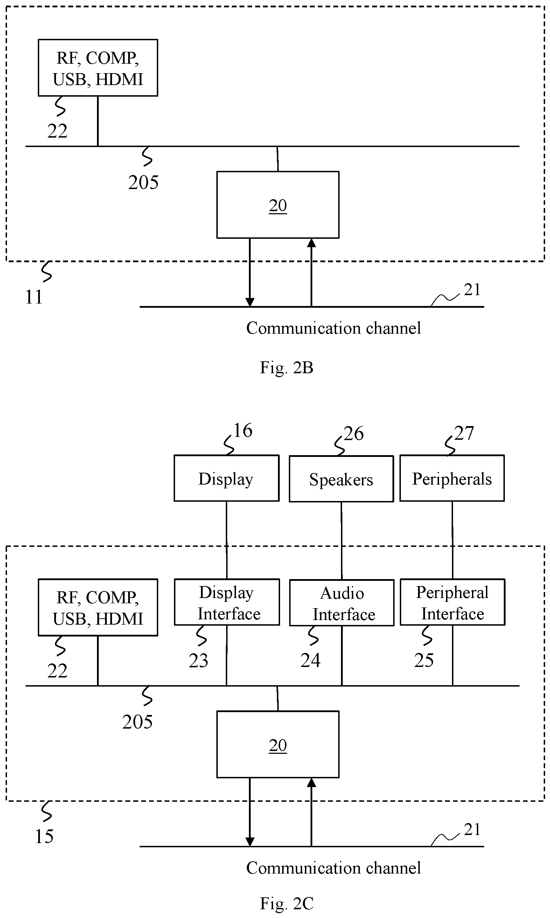

**Fig. 2C** illustrates a block diagram of an example of a receiving system in which various aspects and embodiments are implemented.

The receiving system can be embodied as a device including various components or modules and is configured to receive, for example, A bitstream comprising the SDR version of a video content along with SL-HDR1 metadata and to generate either a reconstructed SDR version of the video content or a reconstructed HDR version of the video content. Examples of such system include, but are not limited to, various electronic systems such as a personal computer, a laptop computer, a smartphone, a tablet, a television or a set top box. Components of the receiving system, singly or in combination, can be embodied in a single integrated circuit (IC), multiple ICs, and/or discrete components. For example, in at least one embodiment, the receiving system comprises one processing module 20 that implements all processes executed by the receiving system. In various embodiments, the receiving system is communicatively coupled to one or more other systems, or other electronic devices, via, for example, a communications bus or through dedicated input and/or output ports.

The input to the processing module 20 can be provided through various input modules as indicated in block 22. Such input modules include, but are not limited to, (i) a radio frequency (RF) module that receives an RF signal transmitted, for example, over the air by a broadcaster, (ii) a component (COMP) input module (or a set of COMP input modules), (iii) a Universal Serial Bus (USB) input module, and/or (iv) a High Definition Multimedia Interface (HDMI) input module. Other examples, not shown in Fig. 2C, include composite video.

In various embodiments, the input modules of block 22 have associated respective input processing elements as known in the art. For example, the RF module can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which can be referred to as a channel in certain embodiments, (iv) demodulating the down-converted and bandlimited signal, (v) performing error correction, and (vi) demultiplexing to select the desired stream of data packets. The RF module of various embodiments includes one or more elements to perform these functions, for example, frequency selectors, signal selectors, band-limiters, channel selectors, filters, downconverters, demodulators, error correctors, and demultiplexers.

The RF portion can include a tuner that performs various of these functions, including, for example, down-converting the received signal to a lower frequency (for example, an intermediate frequency or a near-baseband frequency) or to baseband. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF module includes an antenna.

Additionally, the USB and/or HDMI modules can include respective interface processors for connecting the receiving system to other electronic devices across USB and/or HDMI connections. It is to be understood that various aspects of input processing, for example, Reed-Solomon error correction, can be implemented, for example, within a separate input processing IC or within the processing module 20 as necessary. Similarly, aspects of USB or HDMI interface processing can be implemented within separate interface ICs or within the processing module 20 as necessary. The demodulated, error corrected, and demultiplexed stream is provided to the processing module 20.

Various elements of the receiving system can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the receiving system, the processing module 20 is interconnected to other elements of the receiving system by the bus 205.

The communication interface 204 of the processing module 20 allows the receiving system to communicate on the communication network 21. The communication network 21 can be implemented, for example, within a wired and/or a wireless medium.

Data is streamed, or otherwise provided, to the receiving system, in various embodiments, using a wireless network such as a Wi-Fi network, for example IEEE 802.11 (IEEE refers to the Institute of Electrical and Electronics Engineers). The Wi-Fi signal of these embodiments is received over the communications network 21 and the communications interface 204 which are adapted for Wi-Fi communications. The communications network 21 of these embodiments is typically connected to an access point or router that provides access to external networks including the Internet for allowing streaming applications and other over-the-top communications. Still other embodiments provide streamed data to the receiving system using the RF connection of the input block 22. As indicated above, various embodiments provide data in a non-streaming manner, for example, when the receiving module is a smartphone or a tablet. Additionally, various embodiments use wireless networks other than Wi-Fi, for example a cellular network or a Bluetooth network.

The receiving system can provide an output signal to various output devices using the communication network 21 or the bus 205. For example, the receiving system can provide a video content to a display device 16.

The receiving system can provide an output signal to various output devices, including the display device 16, speakers 26, and other peripheral devices 27. The display device 16 includes one or more of, for example, a touchscreen display, an organic light-emitting diode (OLED) display, a curved display, and/or a foldable display. The display device 16 can be for a television, a tablet, a laptop, a smartphone (mobile phone), or other devices. The display device 16 can also be integrated with other components (for example, as in a smartphone or a tablet), or separate (for example, an external monitor for a laptop). The display device 16 is compatible with video contents generated by the receiving device. The other peripheral devices 27 include, in various examples of embodiments, one or more of a stand-alone digital video disc (or digital versatile disc) (DVR, for both terms), a disk player, a stereo system, and/or a lighting system. Various embodiments use one or more peripheral devices 27 that provide a function based on the output of the receiving system. For example, a disk player performs the function of playing the output of the receiving module.

In various embodiments, control signals are communicated between the receiving system and the display device 16, speakers 26, or other peripheral devices 27 using signaling such as AV.Link, Consumer Electronics Control (CEC), or other communications protocols that enable device-to-device control with or without user intervention. The output devices can be communicatively coupled to the receiving module via dedicated connections through respective interfaces. Alternatively, the output devices can be connected to the receiving module using the communication network 21 via the communication interface 204. The display device 16 and speakers 26 can be integrated in a single unit with the other components of the receiving module in an electronic device such as, for example, a television. In various embodiments, the display interface includes a display driver, such as, for example, a timing controller (T Con) chip.

The display device 16 and speakers 26 can alternatively be separate from one or more of the other components, for example, if the RF module of input 22 is part of a separate set-top box. In various embodiments in which the display device 16 and speakers 26 are external components, the output signal can be provided via dedicated output connections, including, for example, HDMI ports, USB ports, or COMP outputs.

**Fig. 2B** illustrates a block diagram of an example of the ITM module 11 or the TM module 13 adapted to convert YUV video data with a first transfer function and in a first color gamut into YUV video data with a second transfer function and in a second color gamut in which various aspects and embodiments are implemented.

ITM module 11 (respectively TM module 13) can be embodied as a device including the various components and modules described above and is configured to perform one or more of the aspects and embodiments described in this document.

In an embodiment, the ITM module 11 and the TM module 13 are included in a same system.

Examples of such devices include, but are not limited to, various electronic devices such as personal computers, laptop computers, a camera, a smartphone and a server. Elements or modules of the ITM module 11 (respectively the TM module 13), singly or in combination, can be embodied in a single integrated circuit (IC), multiple ICs, and/or discrete components. For example, in at least one embodiment, the ITM module 11 (respectively the TM module 13) comprises one processing module 20 that implement a conversion of YUV video data with a first transfer function and in a first color gamut to YUV video data with a second transfer function and in a second color gamut. In various embodiments, the ITM module 11 (respectively the TM module 13) is communicatively coupled to one or more other systems, or other electronic devices, via, for example, a communications bus or through dedicated input and/or output ports.

The input to the processing module 20 can be provided through various input modules as indicated in block 22 already described in relation to Fig. 2C.

Various elements of the ITM module 11 (respectively the TM module 13) can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the ITM module 11 (respectively the TM module 13), the processing module 20 is interconnected to other elements of the ITM module 11 (respectively the TM module 13) by the bus 205.

The communication interface 204 of the processing module 20 allows the ITM module 11 (respectively the TM module 13) to communicate on the communication network 21. The communication network 21 can be implemented, for example, within a wired and/or a wireless medium.

Data is streamed, or otherwise provided, to the color gamut conversion module, in various embodiments, using a wireless network such as a Wi-Fi network, for example IEEE 802.11 (IEEE refers to the Institute of Electrical and Electronics Engineers). The Wi-Fi signal of these embodiments is received over the communications network 21 and the communications interface 204 which are adapted for Wi-Fi communications. The communications network 21 of these embodiments is typically connected to an access point or router that provides access to external networks including the Internet for allowing streaming applications and other over-the-top communications. Still other embodiments provide streamed data to the ITM module 11 (respectively the TM module 13) using the RF connection of the input block 22. As indicated above, various embodiments provide data in a non-streaming manner.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented, for example, in a processor, which refers to processing devices in general, including, for example, a computer, a microprocessor, an integrated circuit, or a programmable logic device. Processors also include communication devices, such as, for example, computers, smartphones (cell phones), portable/personal digital assistants ("PDAs"), tablets, and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, retrieving the information from memory or obtaining the information for example from another device, module or from user.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", "one or more of" for example, in the cases of "A/B", "A and/or B" and "at least one of A and B", "one or more of A and B" is intended to encompass the selection of the first listed option (A) only, or the selection of the second listed option (B) only, or the selection of both options (A and B). As a further example, in the cases of "A, B, and/or C" and "at least one of A, B, and C", "one or more of A, B and C" such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations or embodiments can produce a variety of signals formatted to carry information that can be, for example, stored or transmitted. The information can include, for example, instructions for performing a method, or data produced by one of the described implementations or embodiments. For example, a signal can be formatted to carry a video content in the first or the second format of a described embodiment. Such a signal can be formatted, for example, as an electromagnetic wave (for example, using a radio frequency portion of spectrum) or as a baseband signal. The formatting can include, for example, encoding a video content in the first or the second format in an encoded stream (or bitstream) and modulating a carrier with the encoded stream. The information that the signal carries can be, for example, analog or digital information. The signal can be transmitted over a variety of different wired or wireless links, as is known. The signal can be stored on a processor-readable medium.

Various embodiments may refer to a bitstream. Bitstreams include, for example, any series or sequence of bits, and do not require that the bits be, for example, transmitted, received, or stored.

**Fig. 6** illustrates a process for converting first YUV data in a first color gamut into second YUV data in a second color gamut, the first color gamut encompassing the second color gamut.

The process of Fig. 6 is for example executed by the processing module 20 of the TM module 13.

The first YUV data are for example the YUV data $YUV_2$ and the second YUV data are for example the YUV data $YUV_3$ described in relation to Fig. 1C.

In a step 70, the processing module 20 obtains the YUV data $YUV_2$.

In a step 71, the processing module 20 applies a conversion process to the YUV data $YUV_2$ to obtain the YUV data $YUV_3$.

**Fig. 7** illustrates the conversion process executed in step 71.

In a step 710, the processing module 20 determines if all pixels of the YUV data $YUV_2$ have been processed. If no, step 710 is followed by a step 711.

In step 711, the processing module 20 obtains a pixel $P_{YUV_2}$ of the YUV data $YUV_2$.

In a step 712, the processing module 20 applies steps 130, 131 and 132 to obtain a pixel $P_{RGB_3^{lin}}$ of the RGB data $RGB_3^{lin}$ from the pixel $P_{YUV_2}$.

In a step 713, the processing module 20 applies a gamut clipping method (corresponding to step 133 in Fig. 1C) according to an embodiment to obtain a pixel $C\_P_{RGB_3^{lin}}$ of the RGB data $C\_RGB_3^{lin}$ from the pixel $P_{RGB_3^{lin}}$.

In a step 714, the processing module 20 applies steps 134 and 135 to obtain a pixel $P_{YUV_3}$ of the YUV data $YUV_3$.

Step 714 is followed by step 710 to continue with the next pixel of the YUV data $YUV_2$. If no pixel remains in the YUV data $YUV_2$ the processing module stops the conversion process.

In an embodiment, the gamut clipping of step 713 consists in determining if the component R (respectively G or B) of the pixel $P_{RGB_3^{lin}}$ fulfils a clipping criterion based on a clipping curve. Responsive to the component R (respectively G or B) of the pixel $P_{RGB_3^{lin}}$ fulfils the clipping criterion, the processing module 20 clips the component R (respectively G or B) to a value provided by the clipping curve. The clipping curve is determined based on at least one YUV pixel $p_{YUV}$ with the transfer function TF2 and the color gamut CG2 with a value neighboring the value of the pixel $P_{YUV_2}$ that provide a value of the component R (respectively G or B) not fulfilling the clipping criterion (i.e., not requiring a clipping) when converted in a RGB pixel $p_{RGB}$ in the linear domain with no transfer function and a color gamut CG3.

In an embodiment, a single pixel $p_{YUV}$ is used to define the clipping curve. The single pixel $p_{YUV}$ is a pixel $P_{YUV_2}^{pre}$ of the YUV data $YUV_2$. For example, the pixel $P_{YUV_2}^{pre}$ is a pixel of the YUV data $YUV_2$ with a value neighboring the value of the pixel $P_{YUV_2}$ previously processed during the conversion process of Fig. 7. For the component R (respectively G and B), the clipping curve is defined by a clipping value *R_low_clip_value* (respectively *G_low_clip_value* and *B_low_clip_value*) corresponding to the component R (respectively G and B) of a pixel $p_{RGB}$ resulting from the conversion of the pixel $P_{YUV_2}^{pre}$ in the linear domain with no transfer function and a color gamut CG3. The clipping criterion is as follows:

If the component R (respectively G and B) of the pixel $P_{RGB_3^{lin}}$ is below R_low_clip_value (respectively G_low_clip_value and B_low_clip_value), the component R (respectively G and B) is clipped to R_low_clip_value (respectively G_low_clip_value and B_low_clip_value).

Otherwise, the component R (respectively G and B) is not clipped.

In another example, the pixel $P_{YUV_2}^{pre}$ is a pixel of the YUV data $YUV_2$ spatially neighboring the pixel $P_{YUV2}$ and previously processed during the conversion process of Fig. 7.

In an embodiment, a plurality of pixels $p_{YUV}$ are used to define the clipping curve. Each pixel $p_{YUV}$ is a pixel of the YUV data $YUV_2$ with values neighboring the value of the pixel $P_{YUV2}$ previously processed during the conversion process of Fig. 7. Each pixel $p_{YUV}$ allows obtaining a RGB pixel $p_{RGB}$ (not fulfilling the clipping criterion). For the component R (respectively G and B), the clipping curve is defined by a clipping value R_low_clip_value (respectively G_low_clip_value and B_low_clip_value) corresponding to an average of the component R (respectively G and B) of the RGB pixels $p_{RGB}$. The clipping criterion is as follows:

If the component R (respectively G and B) of the pixel $P_{RGB_3^{lin}}$ is below R_low_clip_value (respectively G_low_clip_value and B_low_clip_value), the component R (respectively G and B) is clipped to R_low_clip_value (respectively G_low_clip_value and B_low_clip_value).

Otherwise, the component R (respectively G and B) is not clipped.

In another example, each pixel $p_{YUV}$ of the plurality is a pixel of the YUV data $YUV_2$ spatially neighboring the pixel $P_{YUV2}$ and previously processed during the conversion process of Fig. 7.

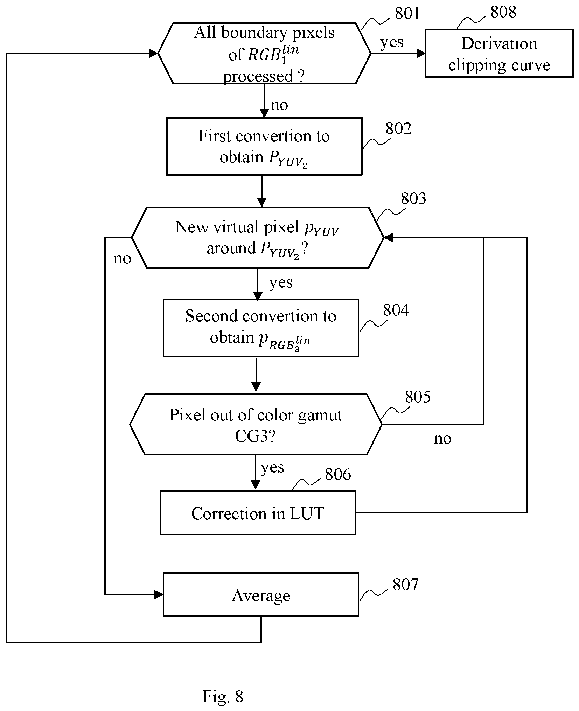

In an embodiment, each clipping curve is obtained by applying a simulation process detailed below in relation to Fig. 8.

**Fig. 8** illustrates a process for obtaining a clipping curve.

The process of Fig. 8 is executed offline, by a processing module 20.

During the process of Fig. 8, the processing module 20 browses all pixels of simulation RGB data $RGB_1^{lin}$ located at the boundary of the color gamut CG1.

To do so, in a step 801, pixels located at the boundary of the color gamut CG1 of the simulation RGB data $RGB_1^{lin}$ are browsed using six independent pixel loops (we suppose here that the simulation RGB data $RGB_1^{lin}$ are "10" bits data):

In a first loop, the component R of the simulation RGB data $RGB_1^{lin}$ is browsed from "0" to "1023", the components G and B being fixed to zero.

In a second loop, the component G of the simulation RGB data $RGB_1^{lin}$ is browsed from "0" to "1023", the components R and B being fixed to zero.

In a third loop, the component B of the simulation RGB data $RGB_1^{lin}$ is browsed from "0" to "1023", the components R and G being fixed to zero.

In a fourth loop, the components R and B of the simulation RGB data $RGB_1^{lin}$ are browsed jointly (R=B) from "0" to "1023", the components G being fixed to zero.

In a fifth loop, the components B and G of the simulation RGB data $RGB_1^{lin}$ are browsed jointly (B=G) from "0" to "1023", the components R being fixed to zero.

In a sixth loop, the components R and G of the simulation RGB data $RGB_1^{lin}$ are browsed jointly (R=G) from "0" to "1023", the components B being fixed to zero.

Those six loops are representing the three primary colors (Red for the first loop, Green for the second loop, Blue for the third loop) and the three secondary colors (Magenta for the fourth loop, Cyan for the fifth loop and Yellow for the sixth loop). Other simulation strategies with more colors could be envisioned to improve the precision of the model.

For each component R, G and B of pixels of the simulation RGB data $RGB_1^{lin}$ located at the boundary of the color gamut CG1 that is supposed to be close to zero (for instance, if in the first loop incrementing R, G and B are supposed to be close to zero), a LUT (Look-Up Table) is created.

Each LUT entry is initialized to "0".

Therefore, nine LUTs are created:

for the first loop (R varying from "0" to "1023", G = B = 0), two LUTs are created: *positive_G_clip_on_red_patch [0..nb_LUT_entry-1]* and *positive B_clip_on_red_patch[0.. nb_LUT_entry-1];*
for the second loop (G varying from "0" to "1023", R = B = 0), two LUTs are created: *positive_R_clip_on_green_patch [0..nb_LUT_entry-1]* and *positive_B_clip_on_green_patch[0..nb_LUT_entry-1];*
for the third loop (B varying from "0" to "1023", R = G = 0), two LUTs are created: *positive_R_clip_on_blue_patch [0..nb_LUT_entry-1]* and *positive_G_clip_on_blue_patch[0..nb_LUT_entry-1];*
for the fourth loop (R = B varying from "0" to "1023", G = 0), one LUT is created: *positive_G_clip_on_magenta_patch [0..nb_LUT_entry-1];*
for the fifth loop (G = B varying from "0" to "1023", R = 0), one LUT is created: *positive_R_clip_on_cyan_patch[0.. nb_LUT_entry-1];*
for the sixth loop (R = G varying from "0" to "1023", B = 0), one LUT is created: *positive_B_clip_on_yellow_patch [0..nb_LUT_entry-1].*

Then the processing module creates a counter for each LUT entry (the counter is initialized to zero):

for the first loop (R varying from "0" to "1023", G = B = 0), two tables of counters are created: *positive_G_clip_on_red_patch_counter[0..nb_LUT_entry-1]* and *positive_B_clip_on_red_patch_counter[0.. nb_LUT_entry-1];*
for the second loop (G varying from "0" to "1023", R = B = 0), two tables of counters are created: *positive_R_clip_on_green_patch counter[0..nb_LUT_entry-1]* and *positive_B_clip_on_green_patch_counter[0.. nb_LUT_entry-1];*
for the third loop (B varying from "0" to "1023", R = G = 0), two tables of counters are created: *positive_R_clip_on_blue_patch_counter[0..nb_LUT_entry-1]* and *positive_G_clip_on_blue_patch_counter[0.. nb_LUT_entry-1];*
for the fourth loop (R = B varying from "0" to "1023", G = 0), one table of counters is created: *positive_G_clip_on_magenta_patch_counter [0..nb_LUT_entry-1];*
for the fifth loop (G = B varying from "0" to "1023", R = 0), one table of counters is created: *positive_R_clip_on_cyan_patch_counter[0.. nb_LUT_entry-1];*
for the sixth loop (R = G varying from "0" to "1023", B = 0), one table of counters is created: *positive_B_clip_on_yellow_patch_counter[0..nb_LUT_entry-1].*

The processing module 20 then applies a first conversion of a RGB pixel $P_{RGB_1^{lin}}$ of the RGB data $RGB_1^{lin}$ in a pixel $P_{YUV_2}$ of the YUV data $YUV_2$.

During the first conversion, for each pixel $P_{RGB_1^{lin}}$ of the independent loops, the processing module 20 applies steps 112, 113 and 114 to the pixel $P_{RGB_1^{lin}}$ to obtain a pixel $P_{YUV_2}$. The pixel $P_{YUV_2}$ is quantized on "10" bits.

Then, in steps 803 to 807 the processing module 20 applies three imbricated loops around each component of the pixel $P_{YUV_2}$. More precisely, if the components of a pixel $P_{YUV_2}$ are (y, u, v), the processing module loops on the values *y-1, y* and *y+1* for the component y, on the values *u-1, u* and *u+1* for the component *u*, and on the values *v-1*, v and v+1 for the component v. Therefore, for each pixel $P_{YUV_2}$, the processing modules 20 obtains "27" virtual pixels $p_{YUV}$ around the pixel $P_{YUV_2}$. Each virtual $p_{YUV}$ has therefore a value neighboring the value of the pixel $P_{YUV_2}$ (or equal to the value of the pixel $P_{YUV_2}$ when the virtual pixel is $P_{YUV_2}$).

In step 803 the processing module 20 determines if all virtual pixel $p_{YUV}$ around the pixel $P_{YUV_2}$ had been considered.

If a new virtual pixel $p_{YUV}$ need to be considered, the processing module 20 applies a second conversion to the virtual pixel $p_{YUV}$ in a step 804. To do so, the processing module 20 applies steps 130, 131 and 132 to the virtual pixel $p_{YUV}$ to obtain a converted virtual pixel $p_{RGB_3^{lin}}$ of the RGB data $RGB_3^{lin}$.

Then for each converted virtual pixel $p_{RGB_3^{lin}}$, the processing module 20 determines in a step 805 if the converted virtual pixel $p_{RGB_3^{lin}}$ is out of the color gamut CG3. To do so, the processing module 20 determines if the component R *R_close_to zero* (respectively G *G_close_to_zero* and B *B_close_to_zero)* that is supposed to be close to zero is of opposite sign from a component R *R_close_to_zero_pre* (respectively *G_close_to_zero_pre* or *B_close_to_zero_pre)* previously memorized for this converted virtual pixel $p_{RGB_3^{lin}}$ (if no component R *R_close_to_zero_pre* (respectively G *G_close_to_zero_pre* or B *B_close_to_zero_pre)* was previously memorized it is supposed that the previously stored component R *R_close_to_zero_pre* (respectively G *G_close_to_zero_pre* or B *B_close_to_zero_pre)* was positive).

If the component R *R_close_to_zero* (respectively G *G_close_to zero* and B *B_close_to_zero)* is of opposite sign from the component R *R_close_to_zero_pre* (respectively G *G_close_to_zero_pre* or B *B_close_to_zero_pre)* previously memorized, in a step 806, the processing module 20 applies a correction process consisting in:

inserting the value of the positive component R (respectively G and B) (either the current *R_close_to_zero* (resp. *G_close_to zero* or *B_close_to_zero)* or the memorized one *R_close_to_zero_pre* (resp. *G_close_to_zero_pre* or *B_close to zero_pre))* in the appropriate LUT at the appropriate LUT entry (as described in the following);

incrementing the counter for the current LUT entry of one unit; and,

memorizing the component *R_close_to_zero* (resp. *G_close_to zero* or *B_close to zero)* for the next YUV iteration (i.e., *R_close_to_zero_pre* = *R_close_to_zero* (resp. *G_close_to_zero_pre* = *G_close_to_zero* or *B_close to zero_pre= B_close to zero).*

The goal of the LUT is to estimate for a RGB pixel the relationship between the component R *R_close_to_zero* (respectively G *G_close_to_zero* and B *B_close_to_zero)* that is supposed to be close to zero and the component R or G or B that is not supposed to be close to zero.

For instance, if in the first loop incrementing R, the first LUT *positive_G_clip_on_red_patch[0..nb_LUT_entry-1]* estimates the relationship between $G_3^{lin}$ that is supposed to be close to zero and $R_3^{lin}$ (that is not constraint to be close to zero), and the second LUT *positive_B_clip_on_red_patch[0.. nb_LUT_entry-1]* estimates the relationship between $B_3^{lin}$ that is supposed to be close to zero and $R_3^{lin}$ (that is not constraint to be close to zero). As these RGB component values are normalized, i.e. their values are within [0.. 1], a quantization is needed to build the LUT. For instance, a 100-entry LUT can be created, each entry index representing the value of the R or G or B component that is not supposed to be close to zero, and each entry being filled with the value of the R *R_close_to_zero* (respectively G *G_close_to_zero* and B *B_close_to_zero)* component that is supposed to be close to zero.

For instance, if in the first loop incrementing R, the LUT index is computed as follow:

$$\text{cur\_LUT\_entry} = \text{CLAMP}(\text{INT}(R_3^{lin} * 100 + 0.5), 0, 99),$$ where CLAMP(x, min_val, max_val) = min(max(x, min_val), max_val). Then the first LUT *positive_G_clip_on_red_patch[]* is filled with the positive value of $G_3^{lin}$ (either the current (i.e., *G_close_to_zero)* or the memorized one (i.e., *G_close to zero_pre))* as follow: $positive\_G\_clip\_on\_red\_patch[cur\_LUT\_entry] += G_3^{lin} * 100$. Similarly, the second LUT *positive_B_clip_on_red_patch[]* is filled with the positive representation of $B_3^{lin}$ (either the current or the memorized one) as follow:

$$positive\_B\_clip\_on\_red\_patch[cur\_LUT\_entry] += B_3^{lin} * 100.$$

For instance if in the first loop with ( $R_1^{lin} = 523, G_1^{lin} = 0, B_1^{lin} = 0$ ), with Y = y, U = u - 1, V = v, the G component *G_cur* of the converted virtual pixel $P_{RGB_3}^{lin}$ is equal to -0.001 and memorized G component *G_prev* = 0.002 (with Y = y, U = u - 1, V = v - 1), using a 100 entry LUT, the processing module 20 adds the positive value at entry corresponding to value $\text{cur\_LUT\_entry} = \text{CLAMP}(\text{INT}(R_3^{lin} * 100 + 0.5), 0, 99)$ : *positive_G_clip_on_red_patch_counter[cur_LUT_entry] = positive_G_clip_on_red_patch_counter[cur_LUT_entry] + 0.002 * 100* and increment the counter for the current LUT entry, positive_G_clip_on_red_patch_counter[cur_LUT_entry] = positive_G_clip_on_red_patch_counter[cur_LUT_entry]+1.

Step 806 is followed by step 803.

If the component *R_close_to_zero* (respectively *G_close_to_zero* and *B_close_to_zero)* has the same sign than the component *R_close_to_zero* (respectively *G_close_to_zero* or *B_close_to_zero)* previously memorized, the processing module 20 returns to step 803.

If at step 803, all possible virtual pixels $p_{YUV}$ around pixel $P_{YUV_2}$ had been considered, step 803 is followed by a step 807.

During step 807, for each LUT entry, the processing module 20 computes an average value of each LUT entry by dividing it by the counter value of the corresponding LUT entry:

for the first loop (R varying from "0" to "1023", G = B = 0): for each LUT entry *cur_entry: positive_G_clip_on_red_patch*

[cur_entry] = positive_G_clip_on_red_patch[cur_entry]/positive_G_clip_on_red_patch_counter[cu r_entry] and positive_B_clip_on_red_patch[cur_entry] = positive_B_clip_on_red_patch[cur_entry]/positive_B_clip_on_red_patch_counter[cu r_entry];

for the second loop (G varying from "0" to "1023", R = B = 0): for each LUT entry cur_entry: positive_R_clip_on_green_patch[cur_entry] = positive R clip on green_patch[cur_entry]/positive_R_clip_on_green_patch_counte r[cur_entry] and positive_B_clip_on_green_patch[cur_entry] = positive B clip on green_patch[cur_entry]/positive_B_clip_on_green_patch_counte r[cur_entry];

for the third loop (B varying from "0" to "1023", R = G = 0): for each LUT entry cur_entry: positive_R_clip_on_-blue_patch[cur_entry] = positive_R_clip_on_blue_patch[cur_entry]/positive_R_clip_on_blue_patch_counter [ cur_entry] and positive_G_clip_on_blue_patch[cur_entry] = positive_G_clip_on_blue _patch[cur_entry]/positive_G_clip_on_green_blue_counter[ cur_entry];

for the fourth loop (R = B varying from "0" to "1023", G = 0): for each LUT entry cur_entry: positive_G_clip_on_magenta_patch[cur_entry] = positive_G_clip_on_magenta_patch[cur_entry]/positive_G_clip_on_magenta_patch_counter[cur_entry];

for the fifth loop (G = B varying from "0" to "1023", R = 0): for each LUT entry cur entry: positive_R_clip_on_cyan_patch[cur_entry] = positive_R_clip_on_cyan_patch[cur_entry]/positive_R_clip_on_cyan_patch_counter[ cur_entry];

for the sixth loop (R = G varying from "0" to "1023", B = 0): for each LUT entry cur_entry: positive_B_clip_on_yellow_patch[cur _entry] = positive_B_clip_on_yellow_patch[cur_entry]/positive_B_clip_on_yellow_patch_coun ter[cur_entry].

After this step, each LUT entry positive_XX_clip_on_YY_patch[cur_entry] (XX being one among R, G and B, YY being one among red, green, blue, magenta, cyan and yellow) represents an average of positive components XX of converted virtual pixels $p_{RGB_3^{lin}}$ obtained from virtual pixels $p_{YUV}$ with values neighboring or close to the value of the pixel $P_{YUV_2}$.

Step 807 is followed by a step 801.

If at step 801, all boundary pixels were processed, the processing module 20 continues with step 808.

During step 808, the processing module 20 applies a process for determining a clipping curve.

From each LUT positive_XX_clip_on_YY_patch the processing module 20 determines a model approximating a point cloud representing each entry of the LUT positive_XX_clip_on_YY_patch.

In an embodiment, the model is at least one straight line the closest to points of the point cloud representing each entry of the LUT positive_XX_clip_on_YY_patch. A first derivative (and optionally a value in zero) is then determined from each straight line.

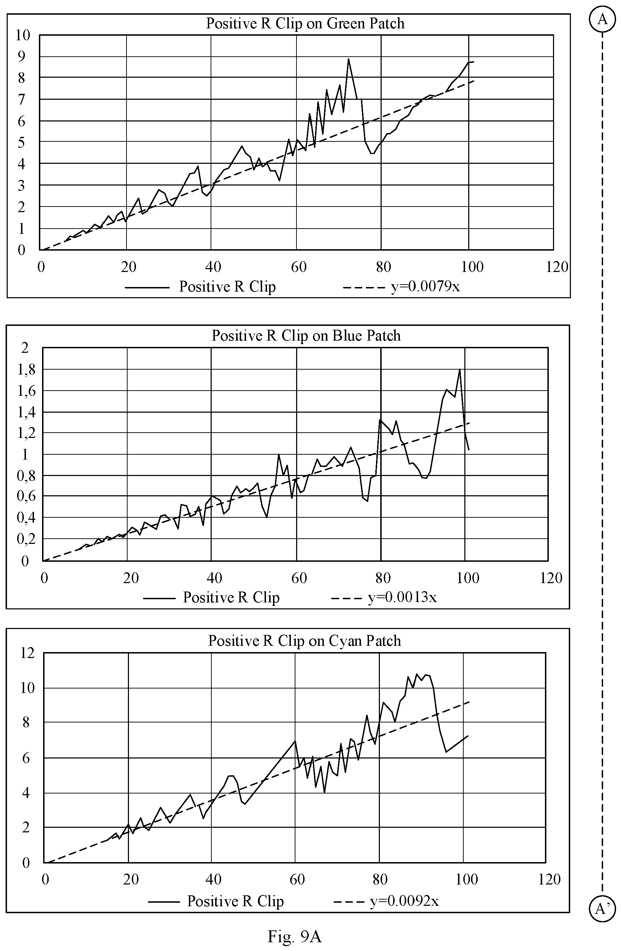

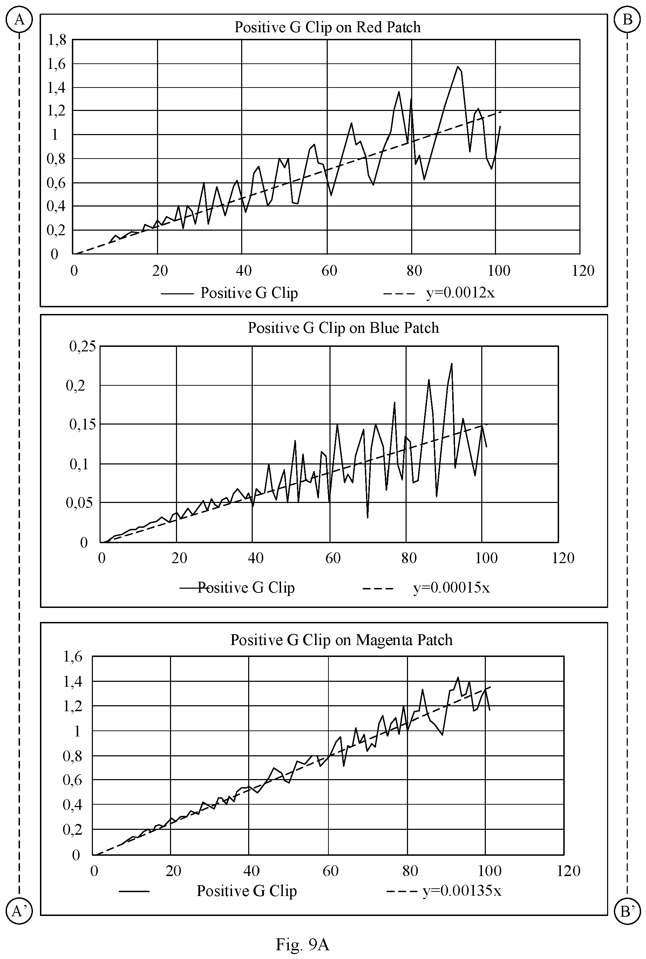

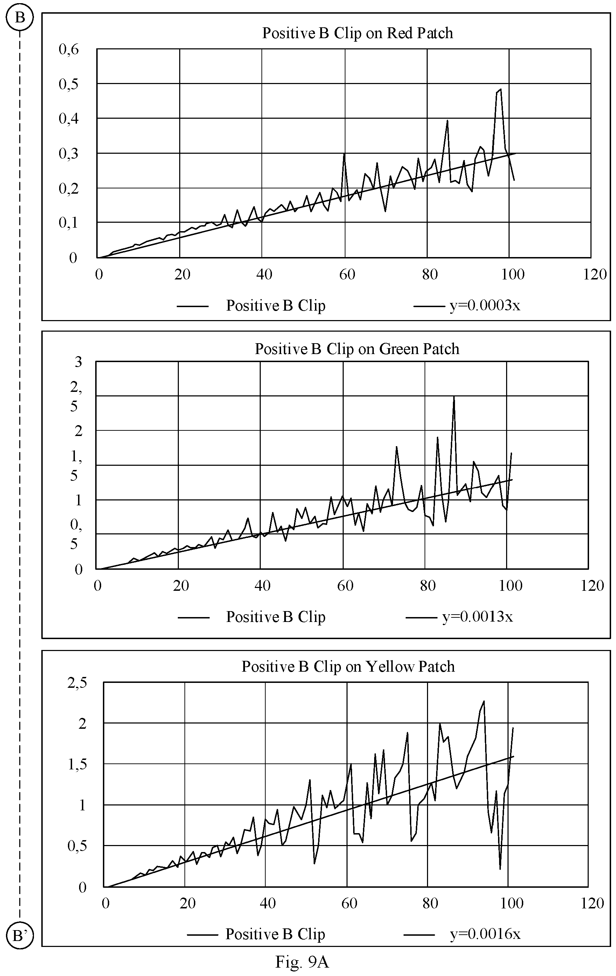

For instance, when using a 100-entry LUT and when dealing with PQ transfer function, the straight lines are provided in **Fig. 9A.**

One can notice that:

The LUT positive_R_clip_on_green_patch may be approximated by a straight line with y = 0.0079x;

The LUT positive_R_clip_on _blue_patch may be approximated by a straight line with y = 0.0013x;

The LUT positive_R_clip_on_cyan_patch may be approximated by a straight line with y = 0.0092x. One can note that this corresponds to the sum of the LUT positive_R_clip_on_green_patch with positive_R_clip_on_blue_patch which is consistent with the fact that cyan is the addition of green and blue;

The LUT positive_G_clip_on_red_patch may be approximated by a straight line with y = 0.0012x;

The LUT positive_G_clip_on_blue_patch may be approximated by a straight line with y = 0.00015x;

The LUT positive_clip_on_magenta_patch may be approximated by a straight line with y = 0.00135x. One can note that this corresponds to the sum of the LUT positive_G_clip_on_magenta_patch with positive_G_clip_on_blue_patch, which is consistent with the fact that magenta is the addition of red and blue;

The LUT positive_B_clip_on_red_patch may be approximated by a straight line with y = 0.0003x;

The LUT positive_B_clip_on_green_patch may be approximated by a straight line with y = 0.0013x;

The LUT positive_B_clip_on_yellow_patch may be approximated by a straight line with y = 0.0016x. One can note that this corresponds to the sum of the LUT positive_B_clip_on_red_patch with positive_B_clip_on_green_patch, which is consistent with the fact that yellow is the addition of red and green.

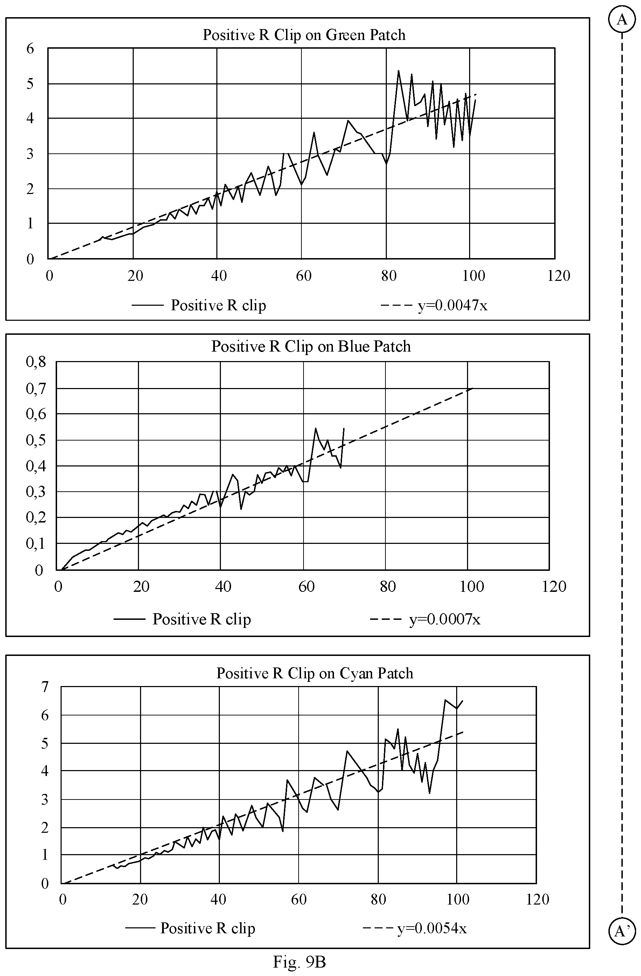

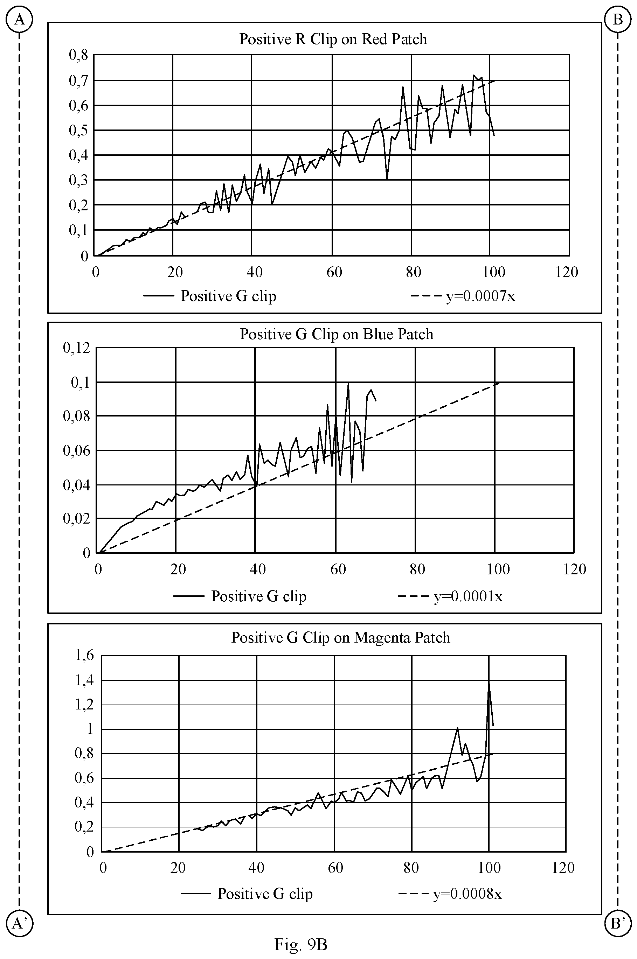

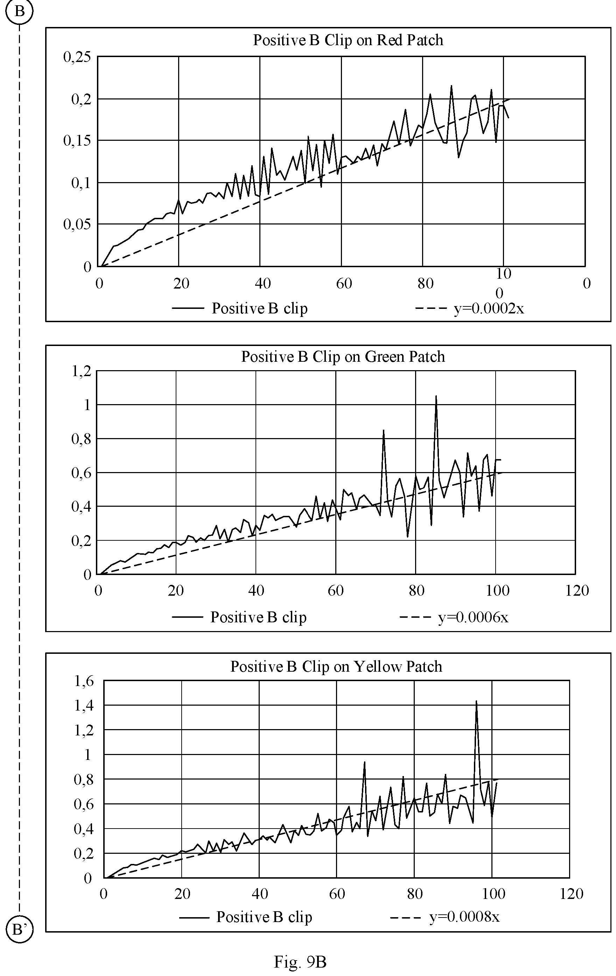

When dealing with HLG transfer function, the straight lines are provided by **Fig. 9B.**

One can notice:

The LUT positive_R_clip_on_green_patch may be approximated by a straight line with y = 0.0047x;

The LUT positive_R_clip_on_blue_patch may be approximated by a straight line with y = 0.0007x

The LUT *positive R_clip_on_cyan_patch* may be approximated by a straight line with y = 0.0054x. Please note that this corresponds to the sum of the LUT *positive R clipping value on a green patch* with the LUT *positive R clipping value on a blue patch,* and this is consistent with the fact that cyan is the addition of green and blue

The LUT *positive G clipping value on a red patch* may be approximated by a straight line with y = 0.0007x;

The LUT *positive G clipping value on a blue patch* may be approximated by a straight line with y = 0.0001x;

The LUT *positive G clipping value on a magenta patch* may be approximated by a straight line with y = 0.0008x. Please note that this corresponds to the sum of the LUT *positive G clipping value on a red patch* with the LUT *positive G clipping value on a blue patch,* and this is consistent with the fact that magenta is the addition of red and blue

The LUT *positive B clipping value on a red patch* may be approximated by a straight line with y = 0.0002x.

The LUT *positive B clipping value on a green patch* may be approximated by a straight line with y = 0.0006x.

The LUT *positive B clipping value on a yellow patch* may be approximated by a straight line with y = 0.0008x. Please note that this corresponds to the sum of the LUT *positive B clipping value on a red patch* with the LUT *positive B clipping value on a green patch,* and this is consistent with the fact that yellow is the addition of red and green.

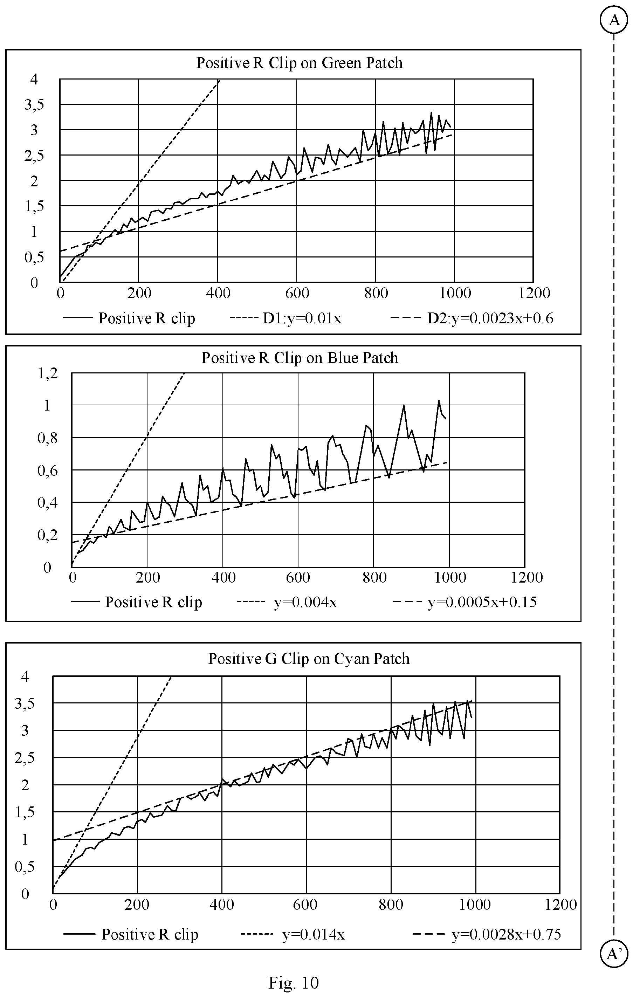

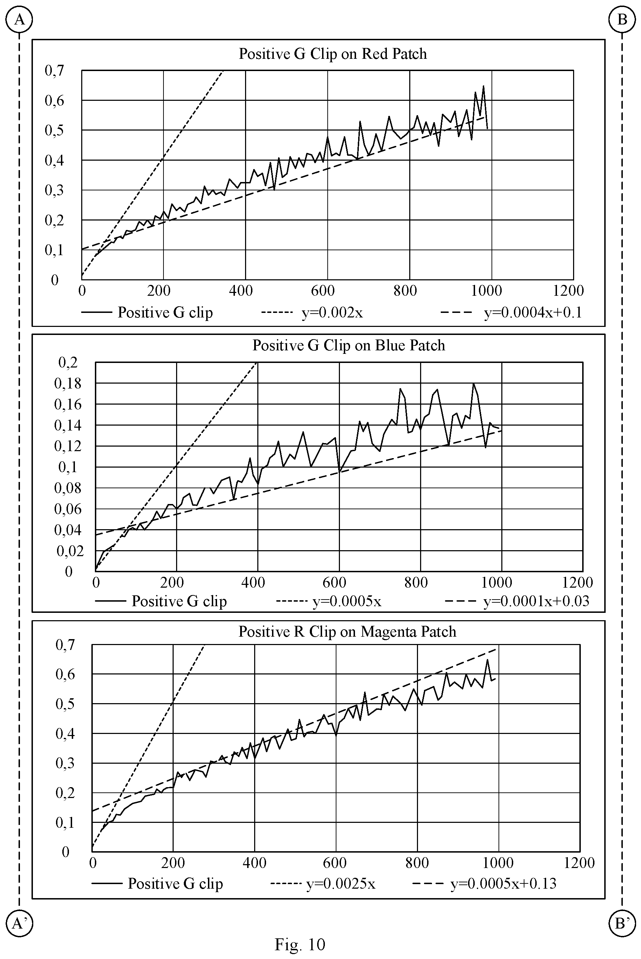

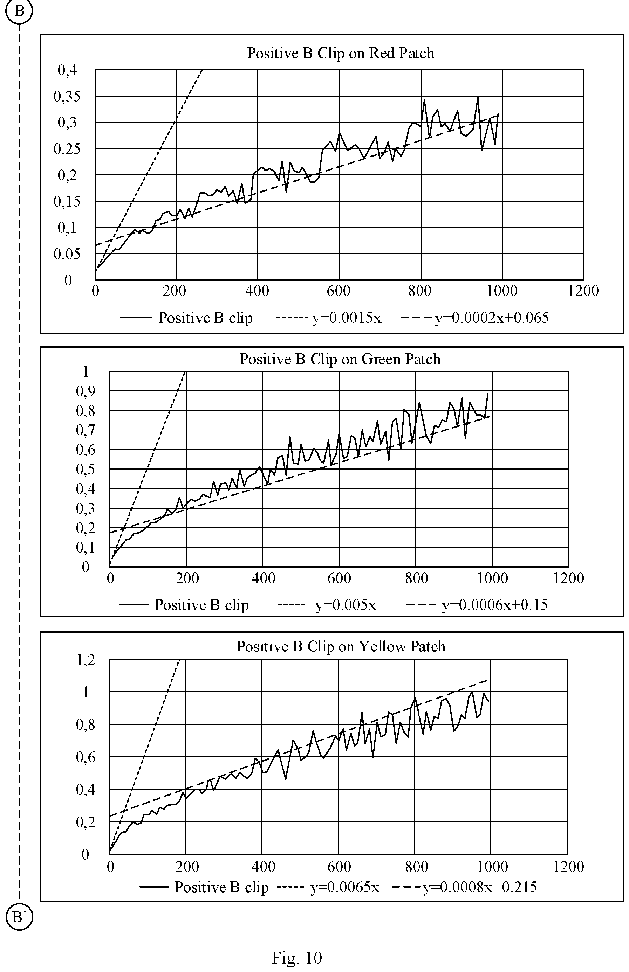

One can notice that a single straight line may not be sufficient for representing a point cloud and obtaining a representative trend. This is particularly the case when dealing with the gamma 2.4 transfer function specified in BT.1886. In that case, in an alternative embodiment, two straight lines are used as shown in the **Fig. 10.** In that solution, the final trend is obtained by taking a minimum value of two straight lines D1 (typically y=ax) and D2 (typically y=ax+b).

One can notice:

The LUT *positive_R_clip_on_green_patch* may be approximated by straight line D1 with (y = 0.01x) and a straight line D2 with (y = 0.0023x+0.6).

The LUT *positive_R_clip_on_blue_patch* may be approximated by a straight line D1 with (y = 0.004x) and a straight line D2 with (y = 0.0005x+0.15).

The LUT *positive_R_clip_on_cyan_patch* may be approximated by a straight line D1 with (y = 0.014x) and a straight line D2 with (y = 0.0028x+0.75). One can note that this corresponds to the sum of the LUT *positive_R_clip_on_green_patch* with *positive_R_clip_on_blue_patch* which is consistent with the fact that cyan is the addition of green and blue.

The LUT *positive_G_clip_on_red_patch* may be approximated by a straight line D1 with (y = 0.002x) and a straight line D2 with (y = 0.0004x+0.1).

The LUT *positive_G_clip_on_blue_patch* may be approximated by straight line D1 with (y = 0.0005x) and a straight line D2 with (y = 0.0001x+0.03).

The LUT *positive_G_clip_on_magenta_patch* may be approximated by a straight line D1 with (y = 0.0025x) and a straight line D2 with (y = 0.0005x+0.13). One can note that this corresponds to the sum of the LUT *positive_G_clip_on_magenta_patch* with *positive_G_clip_on_blue_patch,* which is consistent with the fact that magenta is the addition of red and blue.

The *LUT positive_B_clip_on_red_patch* may be approximated by a straight line D1 with (y = 0.0015x) and a straight line D2 with (y = 0.0002x+0.065).

The LUT *positive_B_clip_on_green_patch* may be approximated by a straight line D1 with (y = 0.005x) and a straight line D2 with (y = 0.0006x+0.15).

The LUT *positive_B_clip_on_yellow_patch* may be approximated by a straight line D1 with (y = 0.0065x) and a straight line D2 with (y = 0.0008x+0.215). One can note that this corresponds to the sum of the LUT *positive_B_clip_on_red_patch* with *positive_B_clip_on_green_patch,* which is consistent with the fact that yellow is the addition of red and green.

Given these data, the processing module 20 determines "18" clipping constants:

R_G_clip : R_G_clip represents the first derivative of the straight line D1 derived from the LUT *positive_R_clip_on_green_patch ;*

R_B_clip : R_B_clip represents the first derivative of the straight line D1 derived from the LUT *positive_R_clip_on_blue_patch;*

G_R_clip : G_R_clip represents the first derivative of the straight line D1 derived from the LUT *positive_G_clip_on_red_patch;*

G_B_clip : G_B_clip represents the first derivative of the straight line D1 derived from the LUT *positive_G_clip_on_blue_patch;*

B_R_clip : B_R_clip represents the first derivative of the straight line D1 derived from the LUT *positive_B_clip_on_red_patch;*

B_G_clip : B_G_clip represents the first derivative of the straight line D1 derived from the LUT *positive_B_cli-*

*p_on_green_patch;*

*R G clip 2 : R G clip* 2 represents the first derivative of the straight line D2 derived from the LUT *positive_R_clip_on_green_patch;*

*R_B_clip 2 : R_B_clip* 2 represents the first derivative of the straight line D2 derived from the LUT *positive_R_clip_on_blue_patch;*

*G_R_clip_2 : G_R_clip_2* represents the first derivative of the straight line D2 derived from the LUT *positive_G_clip_on_red_patch;*

*G_B_clip_2 : G_B_clip* 2 represents the first derivative of the straight line D2 derived from the LUT *positive_G_clip on blue_patch;*

*B_R_clip_2 : B_R_clip_2* represents the first derivative of the straight line D2 derived from the LUT *positive_B_clip_on_red_patch;*

*B G clip 2 : B G clip* 2 represents the first derivative of the straight line D2 derived from the LUT *positive_B_clip_on_green_patch;*

*R_G_offset_2 : R_G_offset_2* represents the value in zero of the straight line D2 derived from the LUT *positive_R_clip_on_green_patch;*

*R_B_offset_2 : R_B_offset_2* represents the value in zero of the straight line D2 derived from the LUT *positive_R_clip_on_blue_patch;*

*G_R_offset_2 : G_R_offset_2* represents the value in zero of the straight line D2 derived from the LUT *positive_G_clip_on_red_patch;*

*G_B_offset_2 : G_B_offset_2* represents the value in zero of the straight line D2 derived from the LUT *positive_G_clip_on_blue_patch;*

*B_R_offset_2 : B_R_offset_2* represents the value in zero of the straight line D2 derived from the LUT *positive_B_clip_on_red_patch;*

*B_G_offset_2 : B_G_offset_2* represents the value in zero of the straight line D2 derived from the LUT *positive_B_clip_on_green_patch;*.

When D2 is not used, as for PQ and HLG transfer functions for which only the first derivative of D1 with the value in zero equal to zero is enough, xx_yy_clip_2 values are all equal to "1" and xx_yy_offset_2 values are all equal to "0".

These 18 constants values depend on the transfer function:

- If PQ :

    *R_G_clip* = 0.0079;
    *R_B_clip* = 0.0013;
    *G_R_clip* = 0.0012;
    *G_B_clip* = 0.00015;
    *B_R_clip* = 0.0003;
    *B_G_clip* = 0.0013;
    *R G clip 2* = 1;
    *R_B_clip_2* = 1;
    *G_R_clip_2* = 1;
    *G_B_clip_2* = 1;
    *B_R_clip_2* = 1;
    *B_G_clip_2* = 1;
    *R_G_offset_2* = 0;
    *R_B_offset_2* = 0;
    *G_R_offset_2* = 0;
    *G_B_offset_2* = 0;
    *B_R_offset_2* = 0;
    *B_G_offset_2* = 0.

- If HLG:

    *R_G_clip* = 0.0047;
    *R_B_clip* = 0.0007;
    *G_R_clip* = 0.0007;
    *G_B_clip* = 0.0001;
    *B_R_clip* = 0.0002;

*B_G_clip* = 0.0006;
*R_G_clip_2* = 1;
*R_B_clip_2* = 1;
*G_R_clip_2* = 1;
*G_B_clip_2* = 1;
*B_R_clip_2* = 1;
*B_G_clip_2* = 1;
*R_G_offset_2* = 0;
*R_B_offset_2* = 0;
*G_R_offset_2* = 0;
*G_B_offset_2* = 0;
*B_R_offset_2* = 0;
*B_G_offset_2* = 0.

- If BT.1886 :

*R_G_clip* = 0.003;
*R_B_clip* = 0.0008;
*G_R_clip* = 0.00055;
*G_B_clip* = 0.00015;
*B_R_clip* = 0.0003;
*B_G_clip* = 0.0008;
*R_G_clip_2* = 0.0023;
*R_B_clip_2* = 0.0005;
*G_R_clip_2* = 0.0004;
*G_B_clip_2* = 0.0001;
*B_R_clip_2* = 0.0002;
*B_G_clip_2* = 0.0006;
*R_G_offset_2* = 0.6;
*R_B_offset_2* = 0.15;
*G_R_offset_2* = 0.1;
*G_B_offset_2* = 0.03;
*B_R_offset_2* = 0.065;
*B_G_offset_2* = 0.15.

These clipping constants allow determining a clipping curve used in the gamut clipping process of step 713.
In particular, the clipping constants allow defining the three clipping values R_low_clip_value, G_low_clip_value and B_low_clip_value as follows:

$$R\_low\_clip\_value = MIN((R\_G\_clip * G\_P_{RGB_3^{lin}} + R\_B\_clip * B\_P_{RGB_3^{lin}}),$$

$$(R\_G\_clip\_2 * G\_P_{RGB_3^{lin}} + R\_G\_offset\_2 + R\_B\_clip\_2 * B\_P_{RGB_3^{lin}} + R\_B\_offset\_2));$$

$$G\_low\_clip\_value = MIN((G\_R\_clip * R\_P_{RGB_3^{lin}} + G\_B\_clip * B\_P_{RGB_3^{lin}}),$$

$$(G\_R\_clip\_2 * R\_P_{RGB_3^{lin}} + G\_R\_offset\_2 + G\_B\_clip\_2 * B\_P_{RGB_3^{lin}} +$$

$$G\_B\_offset\_2));$$

$$B\_low\_clip\_value = MIN((B\_R\_clip * R\_P_{RGB_3^{lin}} + B\_G\_clip * G\_P_{RGB_3^{lin}}),$$

where

$$(B\_R\_clip\_2 * R\_P_{RGB_3^{lin}} + B\_R\_offset\_2 + B\_G\_clip\_2 * G\_P_{RGB_3^{lin}} +$$

$R\_P_{RGB_3^{lin}}$ (respectively $G\_P_{RGB_3^{lin}}$ and $B\_P_{RGB_3^{lin}}$) represents the component R (respectively the component G and B) of a pixel $P_{RGB_3^{lin}}$ of the RGB data $RGB_3^{lin}$.

In a first embodiment of the gamut clipping process of step 713, *R_low_clip_value* represents a lowest possible value of the component R of a pixel $P_{RGB_3^{lin}}$ of the RGB data $RGB_3^{lin}$. When a component R of a pixel $P_{RGB_3^{lin}}$ is below *R_low_clip_value,* this component R is clipped to *R_low_clip_value* in the pixel $C\_P_{RGB_3^{lin}}$ of the RGB data $C\_RGB_3^{lin}$.

*G_low_clip_value* represents a lowest possible value of the component G of a pixel $P_{RGB_3^{lin}}$ of the RGB data $RGB_3^{lin}$. When a component G of a pixel $P_{RGB_3^{lin}}$ is below *G_low_clip_value,* this component G is clipped to *G_low_clip_value* in the pixel $C\_P_{RGB_3^{lin}}$ of the RGB data $C\_RGB_3^{lin}$.

*B_low_clip_value* represents a lowest possible value of the component B of a pixel $P_{RGB_3^{lin}}$ of the RGB data $RGB_3^{lin}$. When a component B of a pixel $P_{RGB_3^{lin}}$ is below *B_low_clip_value,* this component B is clipped to *B_low_clip_value* in the pixel $C\_P_{RGB_3^{lin}}$ of the RGB data $C\_RGB_3^{lin}$.

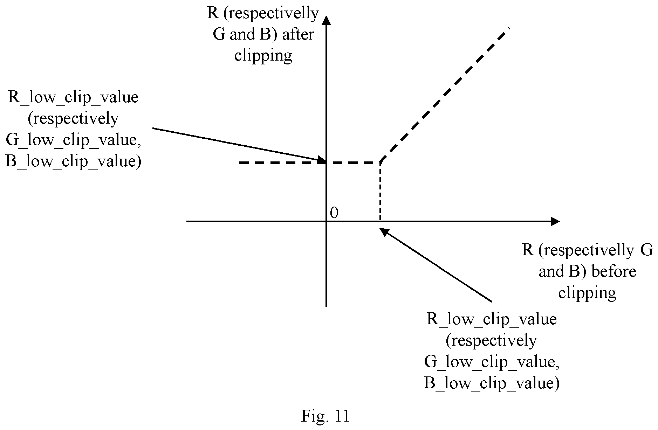

**Fig. 11** illustrates a first embodiment of a definition of a clipping curve used in the gamut clipping process.

One advantage of the first embodiment of the clipping process of step 713 is that the instabilities around zero for colors that are on the third color gamut CG3 (typically BT.709) boundaries are removed. One drawback of this first embodiment is that the R, G or B components are never clipped to zero, even for colors that are far from the color gamut CG3 boundaries and that therefore don't have the instability issue.

In a second embodiment of the gamut clipping process of step 713, this drawback is corrected by using a clipping window offset. This clipping window offset defines a window of values in which a component R (resp. G and B) of a pixel $P_{RGB_3^{lin}}$ of the RGB data $RGB_3^{lin}$ is clipped to *R_low_clip_value,* (resp. *G_low_clip_value* and *B_low_clip_value)* and out of this clipping window, in negative values, the clipping values decrease from the value *R_low_clip_value,* (resp. *G_low_clip_value* and *B_low_clip_value)* down to the value zero.

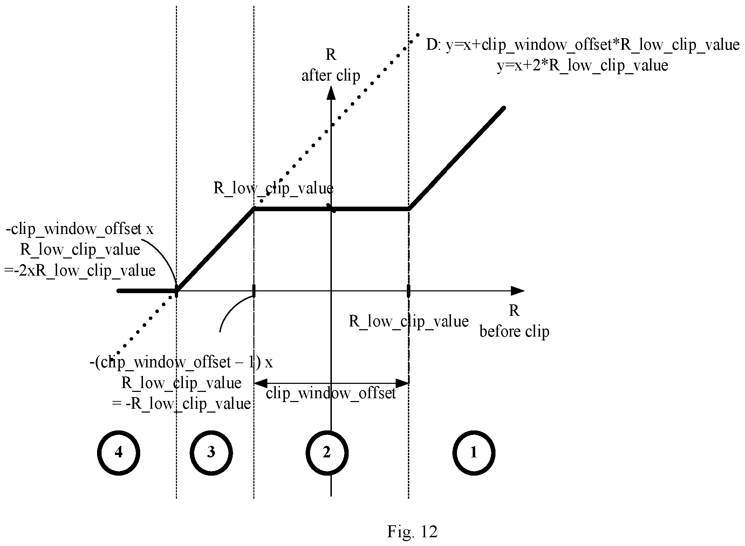

**Fig. 12** illustrates a second embodiment of a definition of a clipping curve used in the gamut clipping process.

In Fig. 12, only the clipping curve for the component R is represented. But similar curves exists for the components G and B.

*Clip_window_offset* is a multiple of *R_low_clip_value* (resp. *G_low_clip_value* and *B_low_clip_value).* In the example of Fig. 12, *Clip_window_offset_*= 2.

In zone 1, for R (resp. G and B) greater than *R_low_clip_value* (resp. *G_low_clip_value* and *B_low_clip_value),* *R_after_clip = R_before_clip* (resp. *G_after_clip = G_before_clip* and *B_after_clip = B_before_clip).*

In zone 2, for R (resp. G and B) below *R_low_clip_value* (resp. *G_low_clip_value* and *B_low_clip value)* and greater than (- (*Clip_window_offset* - 1) * *R_low_clip_value* (resp. *G_low_clip_value* and *B_low_clip_value)),* *R_after_clip_= R_low_clip_value* (resp. *G_after_clip = G_low_clip_value* and *B_after_clip_= B_low_clip_value).*

In zone 3, for R (resp. G and B) below (- (*Clip_window_offset-* 1) * *R_low_clip_value* (resp. *G_low_clip_value* and *B_low_clip_value))* and above (-*Clip_window_offset* * *R_low_clip_value* (resp. *G_low_clip_value* and *B_low_clip_value)),* *R_after_clip = R_before_clip + Clip_window_offset * R_low_clip_value* (resp. *G_after_clip = G_before_clip + Clip_window_offset * G_low_clip_value* and *B_after_clip = B_before_clip + Clip_window_offset * B_low_clip_value).*

In zone 4, for R (resp. G and B) below (- *Clip_window_offset * R_low_clip_value* (resp. *G_low_clip_value* and *B_low_clip_value)),* *R_after_clip* = 0 (resp. *G_after_clip* = 0 and *B_after_clip* = 0).

Clipping values *R_clip_value, G_clip_value* and *B_clip_value* are then computed as follows:

$$R\_clip\_value = \text{Max}(0, \ \text{Min}(R\_P_{RGB_3^{lin}} + clip\_window\_offset * R\_low\_clip\_value, R\_low\_clip\_value));$$

$$G\_clip\_value = \text{Max}(0, \ \text{Min}(G\_P_{RGB_3^{lin}} + clip\_window\_offset * G\_low\_clip\_value, G\_low\_clip\_value));$$

$$B\_clip\_value = \text{Max}(0, \text{Min}(B\_P_{RGB_3^{lin}} + clip\_window\_offset * B\_low\_clip\_value, B\_low\_clip\_value)).$$

$R\_P_{RGB_3^{lin}}$ (respectively $G\_P_{RGB_3^{lin}}$ *and* $B\_P_{RGB_3^{lin}}$ ) represents the component R (respectively the component G and B) of a pixel $P_{RGB_3^{lin}}$ .

Once the clipping value had been computed, components of the pixel $P_{RGB_3^{lin}}$ are clipped as follows:

$$R\_P_{C\_RGB_3^{lin}} = \text{Max}(R\_clip\_value, \text{Min}(R\_P_{RGB_3^{lin}}, 1));$$

$$G\_P_{C\_RGB_3^{lin}} = \text{Max}(G\_clip\_value, \text{Min}(G\_P_{RGB_3^{lin}}, 1));$$

$$B\_P_{C\_RGB_3^{lin}} = \text{Max}(B\_clip\_value, \text{Min}(B\_P_{RGB_3^{lin}}, 1)).$$

. where $R\_P_{C\_RGB_3^{lin}}$ (respectively $G\_P_{C\_RGB_3^{lin}}$ and $B\_P_{C\_RGB_3^{lin}}$ ) represents the component R (respectively the component G and B) of a pixel $P_{C\_RGB_3^{lin}}$ of the RGB data $C\_RGB_3^{lin}$ (i.e., after clipping).

In the second embodiment, the zone 3 (for component R (resp. G and B) below (- *(Clip_window_offset* - 1) * *R_low_clip_value* (resp. *G_low_clip_value* and *B_low_clip_value))* and above (- *Clip_window_offset* * *R_low_clip_value* (resp. *G_low_clip_value* and *B_low_clip_value)))* is defined by a straight line with equation of type *y=x+clip_window_offset*RGB_low_clip_value.*

In a third embodiment of a definition of a clipping curve, an alternate solution would be to find a minimum negative value *RGB_neg_min_CG2_to_CG3* possible when converting the color gamut CG2 (for instance BT.2020) to CG3 (for instance BT.709), and define a straight line between *(RGB_neg_min_CG2_to_CG3,* 0) and (-*(clip_window_offset* - 1) × *RGB_low_clip_value, RGB_low_clip_value).*

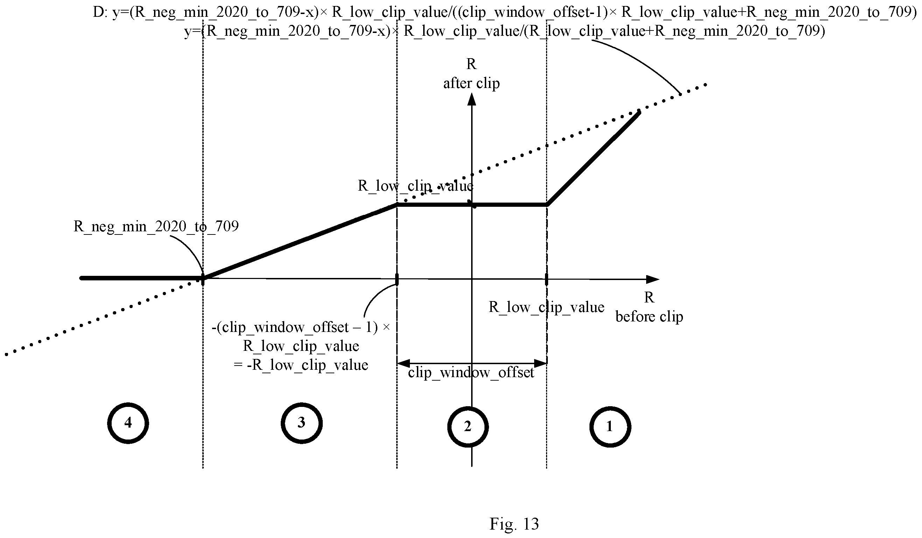

**Fig. 13** illustrates a third embodiment of a definition of a clipping curve used in the gamut clipping process. In embodiment 3, the clipping curve of Fig. 12 is replaced by the clipping curve of Fig. 13. As can be seen only zone 4 is affected by this third embodiment.

It should be noted that until now the point cloud representing each entry of the LUT *positive_XX_clip_on_YY_patch* had been approximated using models corresponding to at least one straight line. Other models could be used alternatively. For instance the point cloud representing each entry of the LUT *positive_XX_clip_on_YY_patch* could be approximated by any other curves such as straight lines with offset, polynomial functions, splines, ...

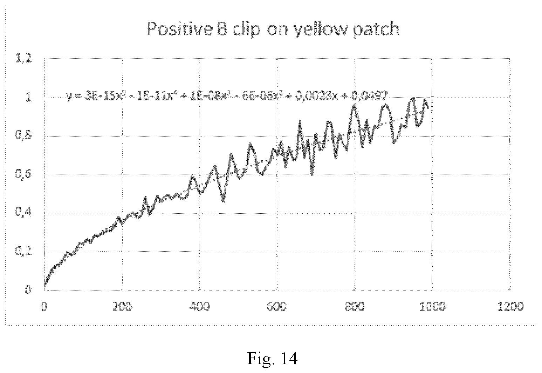

As an example, Fig. 14 illustrates the approximation of one of the point clouds of Fig. 10 with a polynomial function of order "5".

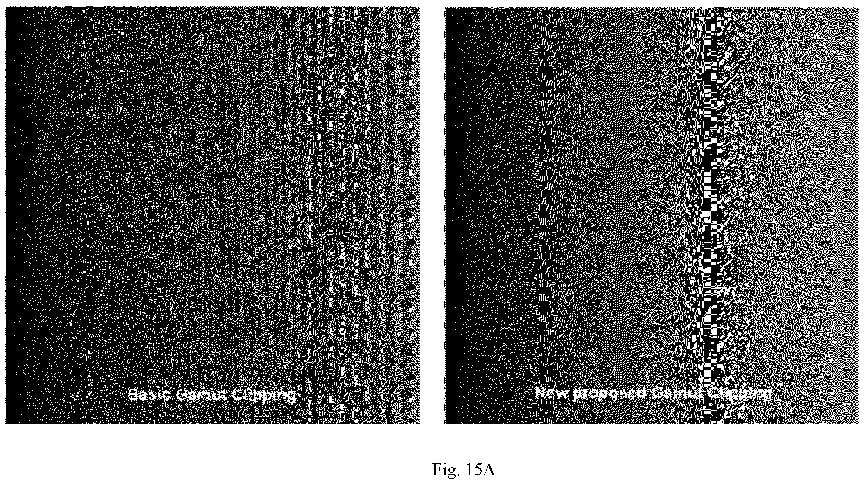

**Fig. 15A** illustrates a comparison of the effect of the basic gamut clipping method to the effect of the new proposed gamut clipping method on a PQ Red ramp (here represented in grey scale) based on the second embodiment of a definition of a clipping curve illustrated in Fig. 12. As can be seen the banding effect has been greatly reduced. Fig. 15A could be compared to Fig. 4A and 4B.

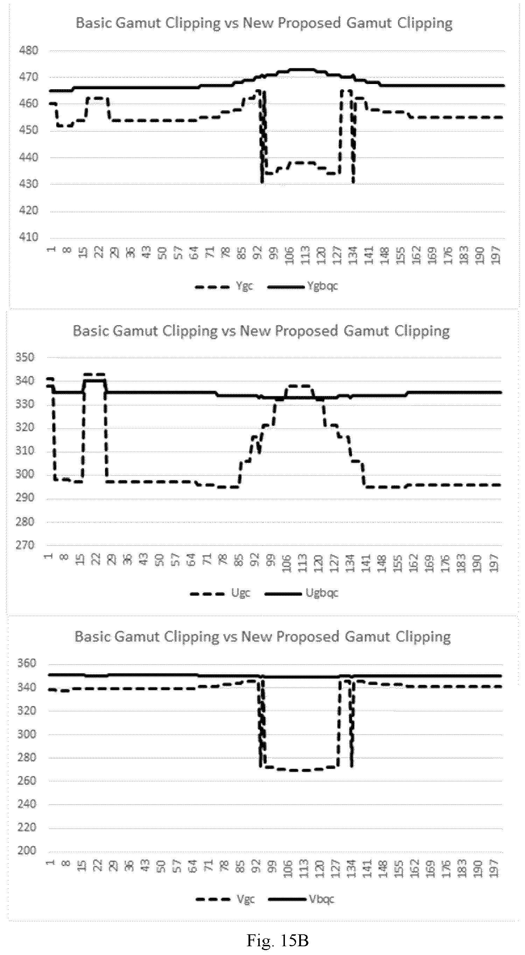

**Fig. 15B** illustrates a comparison of the effect of the basic gamut clipping method (in dashed lines) to the effect of the new proposed gamut clipping method (in full lines) based on the second embodiment of a definition of a clipping curve illustrated in Fig. 12. The temporal evolution of the luminance component of the green patch of the YUV data $YUV_3$ over the "200" frames of the video sequence illustrated in Fig. 5A is represented. Fig. 15 could be compared to Fig. 5B and 5C. One can clearly see the benefits of the new proposed Gamut Clipping method over the basic Gamut Clipping method.

We described above a number of embodiments. Features of these embodiments can be provided alone or in any combination. Further, embodiments can include one or more of the following features, devices, or aspects, alone or in any combination, across various claim categories and types:

- A bitstream or signal that includes one or more of the described video content with converted color gamut using the proposed gamut clipping method, or variations thereof.

- Creating and/or transmitting and/or receiving and/or decoding a bitstream or signal that includes one or more of the described video content with converted color gamut using the proposed gamut clipping method, or variations thereof.

- A server, camera, TV, set-top box, cell phone, tablet, personal computer or other electronic device that performs at least one of the embodiments described.

- A TV, set-top box, cell phone, tablet, personal computer or other electronic device that performs at least one of the embodiments described, and that displays (e.g. using a monitor, screen, or other type of display) a resulting picture.

- A TV, set-top box, cell phone, tablet, personal computer or other electronic device that tunes (e.g. using a tuner) a channel to receive a signal including an encoded video content with converted color gamut, and performs at least one of the embodiments described.

- A TV, set-top box, cell phone, tablet, or other electronic device that receives (e.g. using an antenna) a signal over the air that includes a video content with converted color gamut, and performs at least one of the embodiments described.

- A server, camera, cell phone, tablet, personal computer or other electronic device that tunes (e.g. using a tuner) a channel to transmit a signal including a video content with converted color gamut, and performs at least one of the embodiments described.

- A server, camera, cell phone, tablet, personal computer or other electronic device that transmits (e.g. using an antenna) a signal over the air that includes a video content with converted color gamut, and performs at least one of the embodiments described.

**Claims**

1. A method comprising:

    obtaining (70) a first YUV picture in a first color gamut;
    applying (71) a conversion process to the first YUV picture to obtain a second YUV picture in a second color gamut, the first color gamut encompassing the second color gamut, the conversion process comprising for a first YUV pixel of the first YUV picture:

      obtaining (712) a component of a first RGB pixel in the second color gamut obtained from the first YUV pixel; and,
      applying (713) a gamut clipping process to the component, the gamut clipping process consisting in clipping the component to a value defined by a clipping curve responsive to the component fulfil a clipping criterion based on the clipping curve;
      wherein, the clipping curve is determined using a clipping curve determination process based on at least one second YUV pixel in the first color gamut with a value neighboring the value of the first YUV pixel and that provide a value of the component not fulfilling the clipping criterion when the second YUV pixel is converted in a second RGB pixel in the second color gamut.

2. The method of claim 1 wherein the clipping curve determination process comprises:

    browsing (801) preliminary RGB pixels in a preliminary color gamut located at a boundary of the preliminary color gamut;
    applying a first conversion process converting (802) the preliminary RGB pixels to obtain quantized YUV pixels in the first color gamut;
    for each obtained quantized YUV pixel:

      deriving (803) a plurality of virtual YUV pixels with a value neighboring the quantized YUV pixel from the quantized YUV pixel;
      for each current virtual YUV pixel:

applying (804) a second conversion process converting the current virtual YUV pixel to obtain a converted RGB pixel in the second color gamut; and,

for each component of the converted RGB pixel, responsive (805) to the component is out of the second color gamut, applying (806) a correction to the component to obtain a corrected component, the corrected component being obtained from a component of another converted RGB pixel inside the second color gamut derived from another virtual pixel of the plurality already processed by the second conversion process;

for each color component among R, G and B, obtaining (807) an average component from all obtained corrected components for each quantized YUV pixel; and,

deriving (808) a clipping curve for this color component from the average components corresponding to this color component.

3. The method of claim 2 wherein browsing preliminary RGB pixels in the preliminary color gamut located at a boundary of the preliminary color gamut comprises:

defining a plurality of independent loops in which at least one component among R, G and B is varying on its range of values and at least one other component among R, G and B is fixed to zero; and,

creating a look-Up Table for each component fixed to zero for each loop; each Look-Up Table being used to store the average components corresponding to component fixed to the zero considered for this Look-Up Table.

4. The method of claim 3 wherein the Look-Up Tables are used to define point clouds from which are derived a clipping curve for each component.

5. The method of claim 4 wherein each point cloud is approximated by at least one model, the models being used to derive each clipping curves.

6. The method of claim 5 wherein each model is a straight line or a polynomial function.

7. The method of any previous claim from claim 4 to 6 wherein each clipping curve is defined by at least one clipping constant derived from the point clouds.

8. The method of claim 7 wherein three clipping constants are derived, a first clipping constant being higher than zero, a second clipping constant being lower than zero and a third clipping constant being lower than the second clipping constant, no clipping being applied to a component higher than the first clipping constant, components between the first and the second clipping constants being clipped to a first clipping value, components lower than the third clipping constant being clipped to zero, components between the second and the third clipping constants being clipped according to a decreasing curve connecting the first clipping value to zero.

9. A device comprising electronic circuitry configured for:

obtaining (70) a first YUV picture in a first color gamut;
applying (71) a conversion process to the first YUV picture to obtain a second YUV picture in a second color gamut, the first color gamut encompassing the second color gamut, the conversion process comprising for a first YUV pixel of the first YUV picture:

obtaining (712) a component of a first RGB pixel in the second color gamut obtained from the first YUV pixel; and,

applying (713) a gamut clipping process to the component, the gamut clipping process consisting in clipping the component to a value defined by a clipping curve responsive to the component fulfil a clipping criterion based on the clipping curve;

wherein, the clipping curve is determined using a clipping curve determination process based on at least one second YUV pixel in the first color gamut with a value neighboring the value of the first YUV pixel and that provide a value of the component not fulfilling the clipping criterion when the second YUV pixel is converted in a second RGB pixel in the second color gamut.

10. The device of claim 9 wherein the clipping curve determination process comprises:

browsing (801) preliminary RGB pixels in a preliminary color gamut located at a boundary of the preliminary color gamut;

applying a first conversion process converting (802) the preliminary RGB pixels to obtain quantized YUV pixels in the first color gamut;

for each obtained quantized YUV pixel:

deriving (803) a plurality of virtual YUV pixels with a value neighboring the quantized YUV pixel from the quantized YUV pixel;

for each current virtual YUV pixel:

applying (804) a second conversion process converting the current virtual YUV pixel to obtain a converted RGB pixel in the second color gamut; and,

for each component of the converted RGB pixel, responsive (805) to the component is out of the second color gamut, applying (806) a correction to the component to obtain a corrected component, the corrected component being obtained from a component of another converted RGB pixel inside the second color gamut derived from another virtual pixel of the plurality already processed by the second conversion process;

for each color component among R, G and B, obtaining (807) an average component from all obtained corrected components for each quantized YUV pixel; and,

deriving (808) a clipping curve for this color component from the average components corresponding to this color component.

11. The device of claim 10 wherein browsing preliminary RGB pixels in the preliminary color gamut located at a boundary of the preliminary color gamut comprises:

defining a plurality of independent loops in which at least one component among R, G and B is varying on its range of values and at least one other component among R, G and B is fixed to zero; and,

creating a look-Up Table for each component fixed to zero for each loop;

each Look-Up Table being used to store the average components corresponding to component fixed to the zero considered for this Look-Up Table.

12. The device of claim 11 wherein the Look-Up Tables are used to define point clouds from which are derived a clipping curve for each component.

13. The device of claim 12 wherein each point cloud is approximated by at least one model, the models being used to derive each clipping curves.

14. The device of claim 13 wherein each model is a straight line or a polynomial function.

15. The device of any previous claim from claim 12 to 14 wherein each clipping curve is defined by at least one clipping constant derived from the point clouds.

EP 4 708 277 A1

Fig. 1A

Fig. 1B

Fig. 1C

Fig. 2A

RF, COMP,
USB, HDMI

22

205

20

11

21

Communication channel

Fig. 2B

16

26

27

Display

Speakers

Peripherals

RF, COMP,
USB, HDMI

Display
Interface

Audio
Interface

Peripheral
Interface

22

23

24

25

205

20

15

21

Communication channel

Fig. 2C

R (respectivelly
G and B) after
clipping

R (respectivelly G
and B) before
clipping

0

Fig. 3A

Fig. 3B

- - - - - 709          ———— 2020

Fig. 4A

Fig. 4B

Fig. 5A

Fig. 5B

Fig. 5C

Fig. 6

Fig. 7

All boundary pixels of $RGB_1^{lin}$ processed ? — 801

yes → Derivation clipping curve — 808

no ↓

First convertion to obtain $P_{YUV_2}$ — 802

New virtual pixel $p_{YUV}$ around $P_{YUV_2}$? — 803

no

yes ↓

Second convertion to obtain $p_{RGB_3^{lin}}$ — 804

Pixel out of color gamut CG3? — 805

no

yes ↓ — 806

Correction in LUT

Average — 807

Fig. 8

Fig. 9A

Fig. 9A

Fig. 9A

Fig. 9B

Fig. 9B

Positive B Clip on Red Patch

Positive B Clip on Green Patch

Positive B Clip on Yellow Patch

Fig. 9B

Fig. 10

Fig. 10

Fig. 10

R (respectivelly G and B) after clipping

R_low_clip_value (respectively G_low_clip_value, B_low_clip_value)

0

R (respectivelly G and B) before clipping

R_low_clip_value (respectively G_low_clip_value, B_low_clip_value)

Fig. 11

Fig. 12

EP 4 708 277 A1

D: y=(R_neg_min_2020_to_709-x)× R_low_clip_value/((clip_window_offset-1)× R_low_clip_value+R_neg_min_2020_to_709)

y=(R_neg_min_2020_to_709-x)× R_low_clip_value/(R_low_clip_value+R_neg_min_2020_to_709)

R
after clip

R_low_clip_value

R_neg_min_2020_to_709

-(clip_window_offset – 1) ×
R_low_clip_value
= -R_low_clip_value

R_low_clip_value

R
before clip

clip_window_offset

④ ③ ② ①

Fig. 13

Fig. 14

New proposed Gamut Clipping

Basic Gamut Clipping

Fig. 15A

Fig. 15B

| | Europäisches Patentamt |
| | European Patent Office |
| | Office européen des brevets |

**EUROPEAN SEARCH REPORT**

**Application Number**

**EP 24 30 6477**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/328343 A1 (SAITO NATSUKI [JP] ET AL) 30 December 2010 (2010-12-30) | 1,9 | INV. |
| A | * paragraphs [0008], [0009], [0030], [0130], [0133], [0152] * | 2-8, 10-15 | G09G5/02 H04N1/60 |
|  | ----- |  |  |

**TECHNICAL FIELDS SEARCHED (IPC)**

G09G
H04N

The present search report has been drawn up for all claims

| Place of search | Date of completion of the search | Examiner |
|---|---|---|
| The Hague | 3 February 2025 | Le Chapelain, B |

EPO FORM 1503 03.82 (P04C01)

## ANNEX TO THE EUROPEAN SEARCH REPORT
## ON EUROPEAN PATENT APPLICATION NO.

EP 24 30 6477

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2025

| Patent document cited in search report | Publication date | Patent family member(s) | Publication date |
|---|---|---|---|
| US 2010328343 A1 | 30-12-2010 | CN 101925921 A | 22-12-2010 |
| | | EP 2246818 A1 | 03-11-2010 |
| | | JP WO2009093294 A1 | 26-05-2011 |
| | | US 2010328343 A1 | 30-12-2010 |
| | | WO 2009093294 A1 | 30-07-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- High Performance Single Layer High Dynamic Range (HDR) System for use in Consumer Electronics devices; Part 1: Directly Standard Dynamic Range (SDR)Compatible HDR System (SL-HDR1). *ETSI TS*, August 2021, vol. 103, 433-1 V1.4.1

- Society of Motion Picture and Television Engineers - RP 219-2:2016 Ultra High-Definition. *2048 × 1080 and 4096 × 2160 Compatible Color Bar Signal"*